# EUROPEAN PATENT SPECIFICATION

(11) **EP 4 207 750 B1**
(45) Date of publication and mention of the grant of the patent: **22.04.2026**
(21) Application number: 21868380.3
(22) Date of filing: 17.08.2021
(51) Int. Cl.: H04N 7/14

(54) **DEVICE CONTROL SYSTEM**
VORRICHTUNGSSTEUERUNGSSYSTEM
SYSTÈME DE COMMANDE DE DISPOSITIF

(30) Priority: 18.09.2020 CN 202010990418; 17.11.2020 CN 202011288247
(43) Date of publication of application: 05.07.2023
(73) Proprietor: Huawei Technologies Co., Ltd., Shenzhen, Guangdong 518129 (CN)
(72) Inventor: ZHU, Yuhong, Shenzhen, Guangdong 518129 (CN); NI, Guanjun, Shenzhen, Guangdong 518129 (CN)
(74) Representative: Pfenning, Meinig & Partner mbB
(86) International application number: PCT/CN2021/113078
(87) International publication number: WO 2022/057552

(56) References cited:
- CN-A- 104 184 911
- CN-A- 104 335 558
- CN-A- 106 101 467
- CN-A- 108 462 853
- CN-A- 110 139 258
- US-A1- 2017 026 509
- US-A1- 2017 038 847
- US-B1- 9 325 828

## Description

### TECHNICAL FIELD

This application relates to the technical field of Bluetooth (Bluetooth), and in particular, to a device control system.

### BACKGROUND

With the popularization of mobile office, an increasing number of conferencing applications appear. After a conferencing application is installed on an electronic device (for example, a mobile phone), a user can use the electronic device to join an online conference anytime and anywhere, and perform operations such as video and audio communication and screen sharing during the conference.

After joining a conference, the electronic device displays a conference interface. In the conference interface, some conference control icons such as an icon "Mute", an icon "Video", an icon "Share" for a file, an icon for viewing "Participants", and an icon "More" are included. The user can tap a conference control icon for setting to perform conference control. For example, the user may tap the icon "Mute" to switch between a muted mode and an unmuted mode.

However, when the user is far away from the mobile phone, it is inconvenient for the user to enter a control operation in the conference interface of the mobile phone to control the conference, resulting in low efficiency of the user controlling the conference and poor user experience.
CN 104 335 558 A discloses a system for receiving multiple conversations or messages and for playing the multiple conversations or messages with a mobile device and wireless earpieces. The system may determine various presentation parameters based on various characteristics of the received messages and may play the messages such that audio appears at distinguishing locations around the user. The system may change how messages and/or conversations are played in response to recognize a change in the focus of the user based on detected user inputs, such as body movement gestures.
US 9 325 828 B1 concerns a headset capable of sensing an insertion or separation of earphones, and includes a wireless communication unit provided in a body wearable on a user's body to receive a wireless signal from a connected mobile terminal, a microphone provided in the body to receive a user's voice, a plurality of earphones coupled to the body and insertable into the user's ears, respectively, and a controller configured to activate a function of controlling an operation of the mobile terminal based on the user's voice input through the microphone with connecting a call with respect to the mobile terminal, when one of the plurality of earphones inserted is separated during the call.
US 2017/026509 A1 concerns a unified communications system that enables a user to simultaneously manage real time voice communication with background audio streams such as a music.
CN 110 139 258 A discloses a communication connection method that comprises the following steps of respectively registering anAG role and a hands-free HF role of an audio gateway through a session description protocol SDP; initiating a Bluetooth search for the second communication device, and obtaining a condition that the second communication device supports a role; or receiving the Bluetooth search initiated by the second communication device, and feeding back the condition of the role supported by the second communication device to the second communication device; matching roles between the first communication device and the second communication device according to the Bluetooth search result; establishing a connection with a second communication device according to the matched role

### SUMMARY

This application provides a device control system, to resolve a problem in the conventional technology that efficiency of a user controlling a conference is relatively low and user experience is poor.

To achieve the foregoing objective, this application uses the following technical solutions.

According to a first aspect, an embodiment of this application provides a device control system, including an electronic device and a Bluetooth headset, where the electronic device is connected to the Bluetooth headset via Bluetooth. The Bluetooth headset is configured to: when the Bluetooth headset is in a first mode, control the electronic device to perform a first action after the Bluetooth headset receives a first control operation of a user; and when the Bluetooth headset is in a second mode, control the electronic device to perform a second action after the Bluetooth headset receives a second control operation of the user. The first control operation is the same as the second control operation; and the first action is the same as or different from the second action, where the first action is associated with the first control operation through a first user setting; and the second action is associated with the second control operation through a second user setting.

By using the device control system provided in this embodiment, there is no need to add an extra control operation definition (for example, "Tap the left headphone three times" or "Press and hold the right headphone ") for the Bluetooth headset, and the Bluetooth headset can control the electronic device in the different operating modes based on a same control operation entered by the user, thereby improving efficiency of the user controlling a conference and further improving user experience.

In the first aspect, the first mode is a call mode or an audio play mode, and the second mode is a conference mode. In this embodiment, the user may have fast control over the conference on the electronic device via the Bluetooth headset. Even if the user is far away from the electronic device, conference control can be implemented, helping improve efficiency of conference control and improve user experience.

In the first aspect, the electronic device is configured to: query whether the Bluetooth headset has a conference control capability by using a session description protocol SDP; and if the Bluetooth headset has the conference control capability, notify the Bluetooth headset to enter the conference mode after the electronic device enters the conference mode, and notify the Bluetooth headset to exit the conference mode after the electronic device exits the conference mode.

As the conference control capability may be provided by using a proprietary protocol developed by a manufacturer of the electronic device and the Bluetooth headset, when manufacturers of the Bluetooth headset and the electronic device are different or the Bluetooth headset is of a too early version, the Bluetooth headset may not have the conference control capability. Therefore, the electronic has to notify the Bluetooth headset to enter the conference mode only after that the Bluetooth headset has the conference control capability is determined.

In some embodiments, the first action includes playing audio, pausing audio, playing next audio, enabling a voice assistant, putting through a call, or cutting off a call; and the second action includes muting in a conference, unmuting in a conference, starting a conference video, stopping a conference video, joining a conference, exiting a conference, turning up a volume for a conference, or turning down a volume for a conference.

In some embodiments, the first control operation includes tapping a left headphone twice or tapping a right headphone twice.

In some embodiments, a conferencing application is installed on the electronic device, a conference is scheduled in the conferencing application, and the electronic device is further configured to: display a conference notification at a preset time before the conference starts, where the conference notification includes a first control and a second control; display a conference interface for the conference after an operation of the user on the first control is detected; and close the conference notification after an operation of the user on the second control is detected.

In this embodiment, the electronic device may remind and guide the user to join the conference with a one-tap operation at the preset time before the conference starts (for example, when the conference starts), to help the user avoid missing a conference to some degree, help offer more convenience of joining a conference, and provide better user experience.

In some embodiments, a conferencing application is installed on the electronic device, a conference is scheduled in the conferencing application, and the electronic device is further configured to automatically display a conference interface for the conference at a preset time before the conference starts.

In this embodiment, the electronic device may automatically join the conference without an operation of the user at the preset time before the conference starts (for example, when the conference starts), to help the user avoid missing a conference to some degree, help offer more convenience of joining a conference, and provide better user experience.

In some embodiments, at least one conferencing application is installed on the electronic device, at least two conferences are scheduled in the at least one conferencing application, and the electronic device is further configured to display a conference conflict notification when there is a time conflict between the at least two conferences.

In some embodiments, the system further includes a smart watch, where the smart watch is connected to the electronic device via Bluetooth. The electronic device is configured to enter the conference mode in response to an operation of the user for joining a conference. The smart watch is configured to: display a conference watch face, where the conference watch face includes at least one conference control, and the conference control is used to indicate the smart watch to enter the conference mode; and control the electronic device to perform a third action in response to a third control operation of the user on the conference control.

By using the device control system provided in this embodiment, the user may have fast control over the conference on the electronic device via the smart watch. Even if the user is far away from the electronic device, conference control can be implemented, helping improve efficiency of conference control and improve user experience.

In some embodiments, the smart watch is further configured to: query whether the smart watch has a conference control capability by using the session description protocol SDP; and if the smart watch has the conference control capability, control the smart watch to display the conference watch face after the electronic device enters the conference mode, and control the smart watch to stop displaying the conference watch face after the electronic device exits the conference mode.

As the conference control capability may be implemented according to a proprietary protocol developed by a manufacturer of the electronic device and the Bluetooth headset, when for some reason, for example, manufacturers of the smart watch and the electronic device are different, or the smart watch is of a too early version, the smart watch may not have the conference control capability. Therefore, the electronic device has to notify the smart watch to enter the conference mode only after that the smart watch has the conference control capability is determined.

In some embodiments, the smart watch is further configured to: when the conference control is a mute control, control, by the smart watch based on the third control operation of the user on the mute control, the electronic device to mute or unmute in the conference.

In some embodiments, the smart watch is further configured to: when the conference control is a video control, control, by the smart watch based on the third control operation of the user on the video control, the electronic device to start a conference video or stop a conference video.

In some embodiments, the smart watch is further configured to: when the conference control is a participant control, display, by the smart watch based on the third control operation of the user on the participant control, information about a participant in the conference.

According to a second aspect, an embodiment of this application provides a device control system, including an electronic device and a smart watch, where the electronic device is connected to the smart watch via Bluetooth, and the electronic device is configured to enter the conference mode in response to an operation of the user for joining a conference; and the smart watch is configured to: display a conference watch face, where the conference watch face includes at least one conference control, and the conference control is used to indicate the smart watch to enter the conference mode; and control the electronic device to perform a third action in response to a third control operation of the user on the conference control.

By using the device control system provided in this embodiment, the user may have fast control over the conference on the electronic device via the smart watch. Even if the user is far away from the electronic device, conference control can be implemented, helping improve efficiency of conference control and improve user experience.

In some embodiments, the smart watch is further configured to: query whether the smart watch has a conference control capability by using the session description protocol SDP; and if the smart watch has the conference control capability, control the smart watch to display the conference watch face after the electronic device enters the conference mode, and control the smart watch to stop displaying the conference watch face after the electronic device exits the conference mode.

In some embodiments, the smart watch is further configured to: when the conference control is a mute control, control, by the smart watch based on the third control operation of the user on the mute control, the electronic device to mute or unmute in the conference.

In some embodiments, the smart watch is further configured to: when the conference control is a video control, control, by the smart watch based on the third control operation of the user on the video control, the electronic device to start a conference video or stop a conference video.

In some embodiments, the smart watch is further configured to: when the conference control is a participant control, display, by the smart watch based on the third control operation of the user on the participant control, information about a participant in the conference.

In some embodiments, a conferencing application is installed on the electronic device, a conference is scheduled in the conferencing application, and the electronic device is further configured to: display a conference notification at a preset time before the conference starts, where the conference notification includes a first control and a second control; display a conference interface for the conference after an operation of the user on the first control is detected; and close the conference notification after an operation of the user on the second control is detected.

In this embodiment, the electronic device may remind and guide the user to join the conference with a one-tap operation at the preset time before the conference starts (for example, when the conference starts), to help the user avoid missing a conference to some degree, help offer more convenience of joining a conference, and provide better user experience.

In some embodiments, a conferencing application is installed on the electronic device, a conference is scheduled in the conferencing application, and the electronic device is further configured to automatically display a conference interface for the conference at a preset time before the conference starts.

In this embodiment, the electronic device may automatically join the conference without an operation of the user at the preset time before the conference starts (for example, when the conference starts), to help the user avoid missing a conference to some degree, help offer more convenience of joining a conference, and provide better user experience.

In some embodiments, at least one conferencing application is installed on the electronic device, at least two conferences are scheduled in the at least one conferencing application, and the electronic device is further configured to display a conference conflict notification when there is a time conflict between the at least two conferences.

In some embodiments, the system further includes a Bluetooth headset, where the Bluetooth headset is connected to the electronic device via Bluetooth. The Bluetooth headset is configured to: when the Bluetooth headset is in a first mode, control the electronic device to perform a first action after the Bluetooth headset receives a first control operation of a user; and when the Bluetooth headset is in a second mode, control the electronic device to perform a second action after the Bluetooth headset receives a second control operation of the user. The first control operation is the same as the second control operation; and the first action is the same as or different from the second action, where the first action is associated with the first control operation through a first user setting; and the second action is associated with the second control operation through a second user setting.

In some embodiments, the first mode is a call mode or an audio play mode, and the second mode is a conference mode. In this embodiment, the user may have fast control over the conference on the electronic device via the Bluetooth headset. Even if the user is far away from the electronic device, conference control can be implemented, helping improve efficiency of conference control and improve user experience.

In some embodiments, the electronic device is configured to: query whether the Bluetooth headset has a conference control capability by using a session description protocol SDP; and if the Bluetooth headset has the conference control capability, notify the Bluetooth headset to enter the conference mode after the electronic device enters the conference mode, and notify the Bluetooth headset to exit the conference mode after the electronic device exits the conference mode.

In some embodiments, the first action includes playing audio, pausing audio, playing next audio, enabling a voice assistant, putting through a call, or cutting off a call; and the second action includes muting in a conference, unmuting in a conference, starting a conference video, stopping a conference video, joining a conference, exiting a conference, turning up a volume for a conference, or turning down a volume for a conference.

In some embodiments, the first control operation includes tapping a left headphone twice or tapping a right headphone twice.

According to a non-claimed third aspect, an embodiment of this application provides a Bluetooth headset, where the Bluetooth headset is connected to an electronic device via Bluetooth, and the Bluetooth headset is configured to: when the Bluetooth headset is in a first mode, control the electronic device to perform a first action after the Bluetooth headset receives a first control operation of a user; and when the Bluetooth headset is in a second mode, control the electronic device to perform a second action after the Bluetooth headset receives a second control operation of the user.

The first control operation is the same as the second control operation; and the first action is the same as or different from the second action, where the first action is associated with the first control operation through a first user setting; and the second action is associated with the second control operation through a second user setting.

According to a non-claimed fourth aspect, an embodiment of this application provides a smart watch, where the smart watch is connected to a mobile phone via Bluetooth, and the smart watch is configured to: display a conference watch face after the mobile phone enters a conference mode, where the conference watch face includes at least one conference control, and the conference control is used to indicate the smart watch to enter the conference mode; and control the electronic device to perform a third action in response to a third control operation of the user on the conference control.

According to a non-claimed fifth aspect, an embodiment further provides an electronic device. A conferencing application is installed on the electronic device, a conference is scheduled in the conferencing application, and the electronic device is further configured to: display a conference notification at a preset time before the conference starts, where the conference notification includes a first control and a second control; display a conference interface for the conference after an operation of a user on the first control is detected; and close the conference notification after an operation of the user on the second control is detected.

In some embodiments, the electronic device is further configured to automatically display the conference interface for the conference at the preset time before the conference starts.

In some embodiments, at least one conferencing application is installed on the electronic device, at least two conferences are scheduled in the at least one conferencing application, and the electronic device is further configured to display a conference conflict notification when there is a time conflict between the at least two conferences.

It should be understood that, for beneficial effects of the second aspect to the fifth aspect, refer to related descriptions in the first aspect. Details are not described herein again.

### BRIEF DESCRIPTION OF DRAWINGS

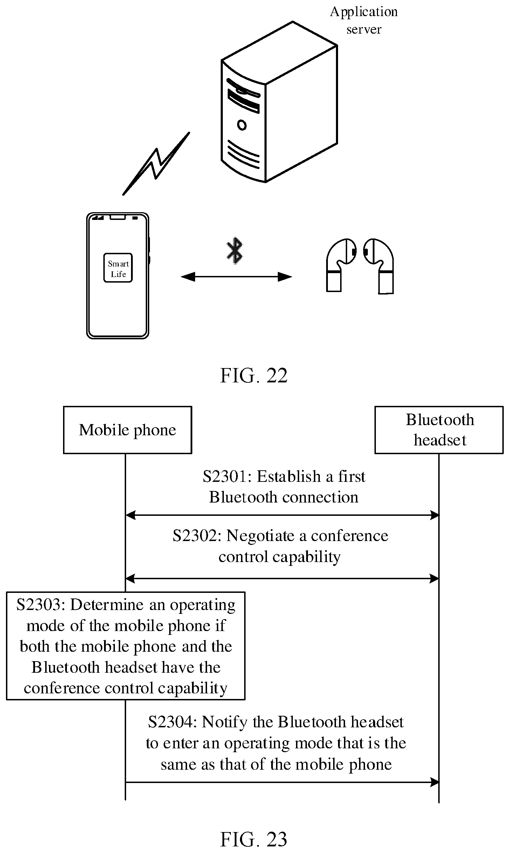

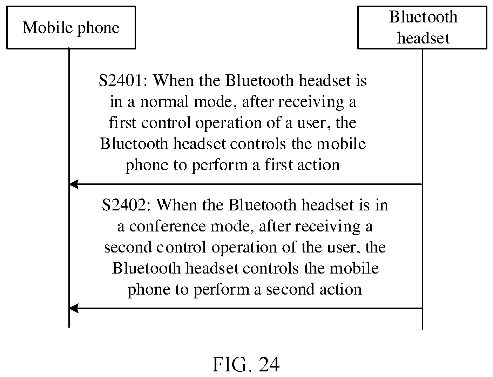

In the following, embodiments and examples of this application are discussed, wherein only those embodiments which concern a device control system, comprising an electronic device and a Bluetooth headset and implementing methods similar to Figure 23 & 24, represent embodiments according to the claimed invention.
FIG. 1 is a block diagram of a part of a structure of a mobile phone according to an embodiment of this application;
FIG. 2 is a schematic diagram of control of a conference control module according to an embodiment of this application;
FIG. 3(a) to FIG. 3(c) are a schematic diagram of a conference joining scenario according to an embodiment of this application;
FIG. 4 is a schematic diagram of a conference scheduling interface according to an embodiment of this application;
FIG. 5(a) to FIG. 5(c) are a schematic diagram of a scenario of an existing method for joining a conference;
FIG. 6(a) to FIG. 6(d) are a schematic diagram of a process of setting a conference mode according to an embodiment of this application;
FIG. 7 is a schematic diagram of a conference conflict reminder according to an embodiment of this application;
FIG. 8(a) and FIG. 8(b) are a schematic diagram of a conference joining scenario according to an embodiment of this application;
FIG. 9 is a schematic diagram of a conference switching scenario according to an embodiment of this application;
FIG. 10 is a schematic diagram of a conference joining scenario according to another embodiment of this application;
FIG. 11(a) and FIG. 11(b) are a schematic diagram of a conference joining scenario according to still another embodiment of this application;
FIG. 12(a) and FIG. 12(b) are a schematic diagram of a conference joining scenario according to yet another embodiment of this application;
FIG. 13 is a schematic diagram of a conference joining scenario according to another embodiment of this application;
FIG. 14(a) and FIG. 14(b) are a schematic diagram of conference control according to an embodiment of this application;
FIG. 15(a) and FIG. 15(b) are a schematic diagram of conference control according to another embodiment of this application;
FIG. 16(a) to FIG. 16(c) are a schematic diagram of a Bluetooth headset according to an embodiment of this application;
FIG. 17 is a schematic diagram of an application scenario of a Bluetooth headset according to an embodiment of this application;
FIG. 18 is a schematic diagram of an application scenario of a Bluetooth headset according to another embodiment of this application;
FIG. 19 is a schematic diagram of an application scenario of a Bluetooth headset according to still another embodiment of this application;
FIG. 20(a) to FIG. 20(g) are a schematic flowchart of setting a shortcut operation according to an embodiment of this application;
FIG. 21(a) to FIG. 21(g) are a schematic flowchart of setting a shortcut operation according to another embodiment of this application;
FIG. 22 is a schematic diagram of a structure of a conference control system according to an embodiment of this application;
FIG. 23 is a flowchart of a method for determining an operating mode of a Bluetooth headset according to the claimed invention;
FIG. 24 is a flowchart of a device control method according to the claimed invention;
FIG. 25 is a schematic diagram of a scenario in which a conference on a mobile phone is controlled by using a Bluetooth headset according to an embodiment of this application;
FIG. 26 is a schematic diagram of a scenario in which a conference on a mobile phone is controlled by using a Bluetooth headset according to another embodiment of this application;
FIG. 27 is a schematic diagram of a scenario in which a conference on a mobile phone is controlled by using a Bluetooth headset according to still another embodiment of this application;
FIG. 28 is a schematic diagram of a scenario in which a conference on a mobile phone is controlled by using a Bluetooth headset according to yet another embodiment of this application;
FIG. 29 is a schematic diagram of a scenario in which a conference on a mobile phone is controlled by using a Bluetooth headset according to yet another embodiment of this application;
FIG. 30 is a schematic diagram of a structure of a conference control system according to yet another embodiment of this application;
FIG. 31 is a flowchart of a device control method according to another embodiment of this application;
FIG. 32 is a schematic diagram of a configuration of a conference control system according to an embodiment of this application;
FIG. 33(a) and FIG. 33(b) are a schematic diagram of a scenario in which a conference on a mobile phone is controlled by using a smart watch according to an embodiment of this application;
FIG. 34 is a schematic diagram of a home screen interface of a smart watch according to an embodiment of this application;
FIG. 35(a) and FIG. 35(b) are a schematic diagram of a scenario in which a conference on a mobile phone is controlled by using a smart watch according to an embodiment of this application;
FIG. 36(a) and FIG. 36(b) are a schematic diagram of a scenario in which a conference on a mobile phone is controlled by using a smart watch according to another embodiment of this application;
FIG. 37(a) and FIG. 37(b) are a schematic diagram of a scenario in which a conference on a mobile phone is controlled by using a smart watch according to still another embodiment of this application;
FIG. 38(a) and FIG. 38(b) are a schematic diagram of a scenario in which a conference on a mobile phone is controlled by using a smart watch according to still another embodiment of this application;
FIG. 39 is a schematic diagram of a structure of a conference control system according to yet another embodiment of this application; and
FIG. 40 is a schematic diagram of a structure of a conference control system according to yet another embodiment of this application.

### DESCRIPTION OF EMBODIMENTS

With the popularization of mobile office, more and more mobile office software is widely used, including some conferencing applications that can provide web conferencing services, for example, WeLink, DingTalk, and WeCom. After a conferencing application is installed on an electronic device, a user may initiate/join a voice over Internet protocol (voice over Internet protocol, VOIP) call, to use an electronic device to join an online conference anytime and anywhere, and perform operations such as video and audio communication and screen sharing during the conference.

In this embodiment, the electronic device may be an intelligent device, for example, a mobile phone, a tablet computer, a laptop computer, a netbook, a personal computer (personal computer, PC), an ultra-mobile personal computer (ultra-mobile personal computer, UMPC), a personal digital assistant (personal digital assistant, PDA), an augmented reality (augmented reality, AR)/virtual reality (virtual reality, VR) device, or a television (television, TV). A specific type of the electronic device is not limited in this embodiment of this application.

Technical solutions provided in the embodiments of this application are described below by using an example in which the electronic device is a mobile phone.

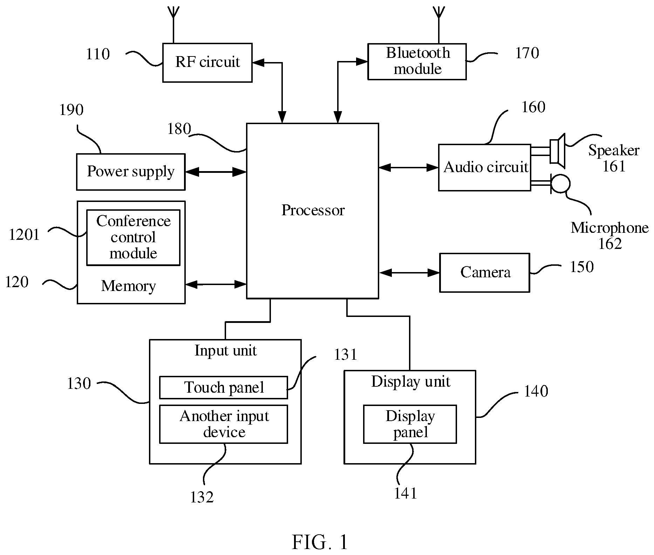

FIG. 1 is a block diagram of a part of a structure of a mobile phone according to an embodiment of this application. As shown in FIG. 1, the mobile phone includes components such as a radio frequency (radio frequency, RF) circuit 110, a memory 120, an input unit 130, a display unit 140, a camera 150, an audio circuit 160, a Bluetooth module 170, a processor 180, and a power supply 190. A person skilled in the art can understand that the structure of the mobile phone shown in FIG. 1 does not constitute a limitation on the mobile phone. In actual application, the mobile phone may include more or fewer components than those shown in the figure, or combine some components, or have different component arrangements.

The RF circuit 110 may be configured to receive and send information, or receive and send a signal during a call. In particular, the RF circuit 110 can receive downlink information from a base station and then send the downlink information to the processor 180 for processing; and can further send designed uplink data to the base station. The RF circuit 110 usually includes but is not limited to an antenna, at least one amplifier, a transceiver, a coupler, a low noise amplifier (low noise amplifier, LNA), a duplexer, and the like. In addition, the RF circuit 110 may further communicate with a network and another device through wireless communication. The wireless communication may use any communication standard or protocol, including but not limited to a global system for mobile communication (global system for mobile communication, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short message service (short message service, SMS), and the like.

The memory 120 may be configured to store a software program and a module. The processor 180 performs various functional applications on the mobile phone and data processing by running the software program and the module that are stored in the memory 120. The memory 120 may mainly include a program storage area and a data storage area. The program storage area may store an operating system, an application (for example, a conferencing application) required for at least one function, and the like. The data storage area may store data (for example, audio data and a phone book) created as the mobile phone is used, and the like. In addition, the memory 120 may include a high-speed random access memory, or may include a nonvolatile memory, for example, at least one magnetic disk storage device, a flash memory device, or another volatile solid-state storage device.

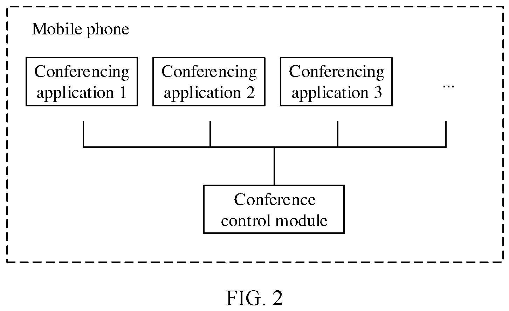

In this embodiment, the memory 120 stores a conference control module 1201. Refer to FIG. 2. As required for a work, a user may install a plurality of conferencing applications on the mobile phone, for example, a conferencing application 1, a conferencing application 2, and a conferencing application 3, and schedule a conference in a conferencing application. By running the conference control module 1201, the processor 180 may manage conference scheduling information in each conferencing application installed on the mobile phone, and automatically join a conference by using the method for joining a conference provided in the embodiments when the conference starts or at a preset time (for example, 1 minute, 5 minutes, or 15 minutes) before the conference starts, or guide the user to join the conference with a one-tap operation. For the method for joining a conference, refer to the following descriptions. Details are not described herein in this embodiment.

The input unit 130 may be configured to receive input digital or character information, and generate key signal input related to a user setting and function control on the mobile phone. Specifically, the input unit 130 may include a touch panel 131 and another input device 132. The touch panel 131, also referred to as a touchscreen, may collect a touch operation of the user on or near the touch panel 131 (for example, an operation of the user on or near the touch panel 131 by using any suitable object or accessory, for example, a finger or a stylus), and drive a corresponding connection apparatus according to a preset program. Optionally, the touch panel 131 may include two parts: a touch detection apparatus and a touch controller. The touch detection apparatus detects a touch location of the user, detects a signal along with a touch operation, and transfers the signal to the touch controller. The touch controller receives touch information from the touch detection apparatus, converts the touch information into touch point coordinates, sends the touch point coordinates to the processor 180, and receives and executes a command sent by the processor 180. In addition, the touch panel 131 may be implemented by using a plurality of types, such as a resistive type, a capacitive type, an infrared ray type, and a surface acoustic wave type. In addition to the touch panel 131, the input unit 130 may further include the another input device 132. Specifically, the another input device 132 may include, but is not limited to, one or more of a physical keyboard, a functional key (for example, a volume control key or an on/off key), a trackball, a mouse, and a joystick.

The display unit 140 may be configured to display information entered by the user or information provided to the user, and various menus on the mobile phone. The display unit 140 may include a display panel 141. Optionally, the display panel 141 may be configured in a form of a liquid crystal display (liquid crystal display, LCD), an organic light-emitting diode (organic light-emitting diode, OLED), or the like. Further, the touch panel 131 may cover the display panel 141. After detecting a touch operation on or near the touch panel 131, the touch panel 131 transfers the touch operation to the processor 180, to determine a type of a touch event. Subsequently, the processor 180 provides corresponding visual output in the display panel 141 based on the type of the touch event. In FIG. 1, the touch panel 131 and the display panel 141 serve as two independent components to implement input and input functions of the mobile phone. However, in some embodiments, the touch panel 131 and the display panel 141 may be integrated to implement the input and output functions of the mobile phone.

A position of the camera 150 on the mobile phone may be front-facing or rear-facing. This is not limited in this embodiment of this application. Optionally, the mobile phone may include a single camera, two cameras, three cameras, or the like. This is not limited in this embodiment of this application. For example, the mobile phone may include three cameras, where one is a primary camera, one is a wide-angle camera, and one is a long-focus camera. Optionally, when the mobile phone includes a plurality of cameras, the plurality of cameras may be all front-facing, or all rear-facing, or partially front-facing and partially rear-facing. This is not limited in this embodiment of this application.

The audio circuit 160, a speaker 161, and a microphone 162 may provide an audio interface between the user and the mobile phone. The audio circuit 160 may convert received audio data into an electrical signal, and then transmit the electrical signal to the speaker 161, and the speaker 161 converts the electrical signal into a sound signal for output. In addition, the microphone 162 converts a collected sound signal into an electrical signal that is received and converted into audio data by the audio circuit 160. The audio data is then output to the processor 180 for processing, and is sent to, for example, another mobile phone through the RF circuit 110; or the audio data is then output to the memory 120 for further processing.

Bluetooth is a short-range wireless communication technology. The mobile phone may communicate with another electronic device (for example, a mobile phone, a personal computer PC, a tablet computer, a laptop computer, a smart watch, or smart glasses) or a peripheral (for example, a Bluetooth headset) of the mobile phone by using the Bluetooth module 170.

The processor 180 is a control center of the mobile phone that is connected to various parts of the entire mobile phone through various interfaces and lines, and performs various functions of the mobile phone and data processing by running or executing the software program and/or the module stored in the memory 120 and invoking data stored in the memory 120, to perform overall monitoring over the mobile phone. Optionally, the processor 180 may include one or more processing units. Optionally, an application processor and a modem processor may be integrated into the processor 180. The application processor mainly processes an operating system, a user interface, an application, and the like, and the modem processor mainly processes wireless communication. It can be understood that the modem processor may alternatively be not integrated into the processor 180.

The mobile phone further includes the power supply 190 (for example, a battery) that supplies power to the components. Optionally, the power supply may be logically connected to the processor 180 by using a power management system, thereby implementing functions such as charging, discharging, and power consumption management by using the power management system.

In addition, although not shown in the figure, the mobile phone may further include a wireless fidelity (wireless fidelity, Wi-Fi) module and the like. Details are not described herein.

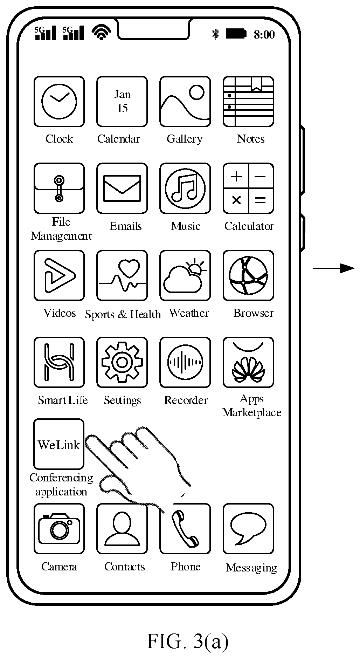

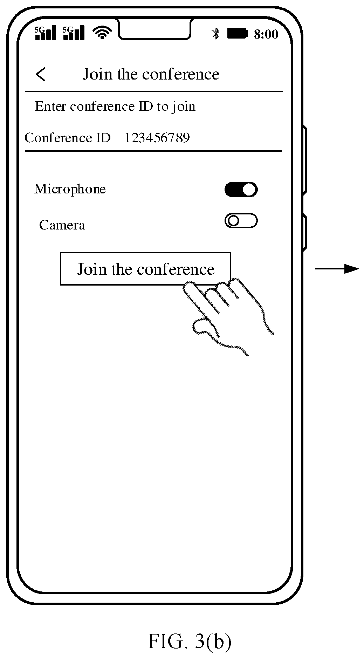

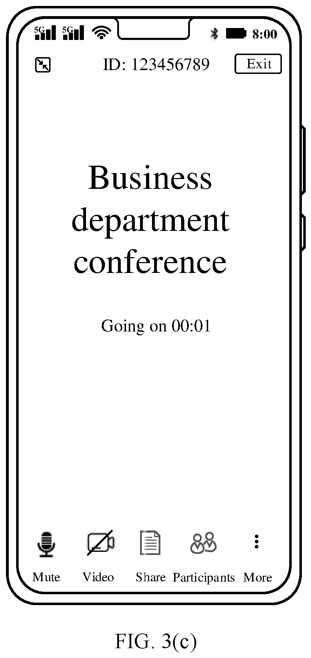

FIG. 3(a) to FIG. 3(c) are a schematic diagram of a conference joining scenario according to an embodiment of this application. In an example, refer to FIG. 3(a). A conferencing application (for example, WeLink) is installed on a mobile phone, and the mobile phone may open the conferencing application after detecting an operation of a user on an icon of the conferencing application. In a display interface of the conferencing application, for example, as shown in FIG. 3(b), a conference identifier (identification, ID) input area, a microphone control option, a camera control option, and an icon "Join the conference". The mobile phone obtains a conference ID entered by the user in the display interface and joins a conference corresponding to the conference ID after detecting an operation of the user on the icon "Join the conference". In this embodiment, the conference ID is used to uniquely identify one online conference. After the mobile phone joins the conference, the mobile phone may display a conference interface, for example, as shown in FIG. 3(c). In the conference interface, the conference ID, a conference name, a conference length, and a conference control icon (also referred to as a conference control). For example, the conference control icon may include an icon "Mute", an icon "Video", an icon "Share", an icon "Participants", an icon "More", and the like. The icon "Mute" is used to control turning on or turning off of a microphone during a conference. The icon "Video" is used to control turning on or turning off of a camera during a conference. The icon "Share" is used to control sharing of a file in a conference. The icon "Participants" is used to view information about conference participants. The icon "More" is used to view more content about a conference, for example, a recording option.

It should be noted that, in this embodiment, a user operates one icon, one control, or one option, including tapping, double-tapping, pressing and holding, or heavily pressing the icon, the control, or the option.

A person skilled in the art should understand that, in this embodiment, the mobile phone may alternatively join a conference in another manner. For example, a conference link or conference pop-up reminder information on a mobile phone may be used. A specific manner of the mobile phone to join a conference is not limited in this embodiment.

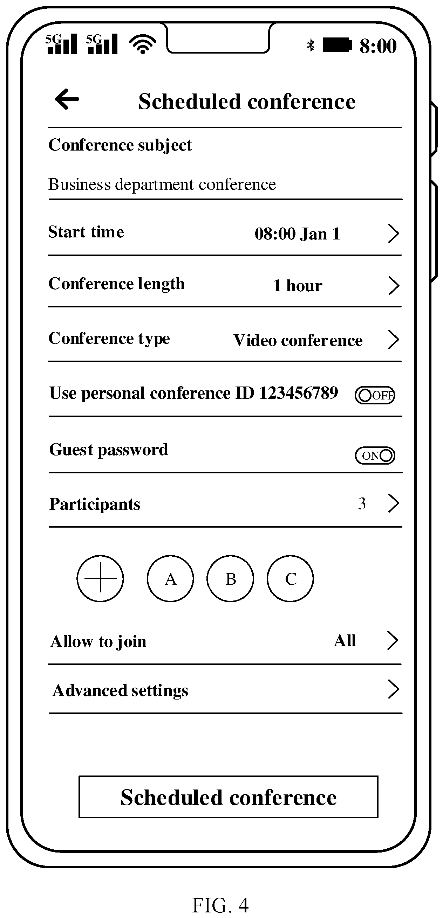

The conferencing application usually supports a conference scheduling function, so that participants can have a time schedule in advance and prepare for a conference. WeLink is used as an example. As shown in FIG. 4, a user may determine information, for example, a conference time (for example, 08:00 on January 1), a conference subject (for example, Business department conference), a conference length (for example, one hour), a conference type (for example, a video conference), and participants (for example, a user A, a user B, and a user C) in a conference scheduling interface.

Participants may forget a conference that is scheduled in advance. In view of this, in some embodiments, after receiving an operation of a user to open the conferencing application, the mobile phone may display information about a conference that the user has on a current date. The information about the conference may include a conference ID number, a conference time, and an icon of a link for joining the conference. The mobile phone may remind the user of the to-be-joined conference 15 minutes in advance, or another icon that may be used to perform an operation for the to-be-joined conference.

In some embodiments, the conferencing application may further integrate a to-do list or a calendar of the user. After receiving an operation of the user to open the conferencing application, the mobile phone displays a first interface by default. In the first interface, the information about the to-be-joined conference on the current date is included. The mobile phone may further invoke the calendar according to a user instruction, to display information about a link of a conference on any day.

In some embodiments, the conferencing application may further integrate a mailbox of the user. After the mobile phone receives an email with a conference link, the conferencing application may automatically display the conference information in the conference information. In this case, the user may not need to enter information, for example, a conference ID, and the mobile phone may automatically join a corresponding conference after receiving a user operation on the option "Join the conference".

In some embodiments, the conferencing application may remind, by using an application message, the user to attend the conference when the conference starts or at a preset time (for example, 15 minutes) before the conference time. The user may enter the conferencing application by operating the conference reminder message. In the conferencing application, the user may further operate conference scheduling information to join/decline the conference.

WeLink is used as an example below to describe a manner of the conferencing application to provide a conference reminder.

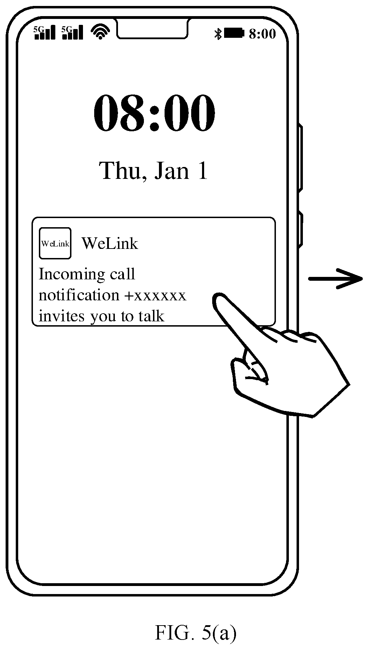

As shown in FIG. 5(a), when the conference starts (for example, 08:00 on January 1), WeLink automatically notifies the mobile phone to display an incoming call notification message, to remind the user to join the conference. For example, the incoming call notification message may be "xxxxxx invites you to talk". After detecting an operation of the user on the incoming call notification message, the mobile phone enters the conferencing application, and displays a conference control interface.

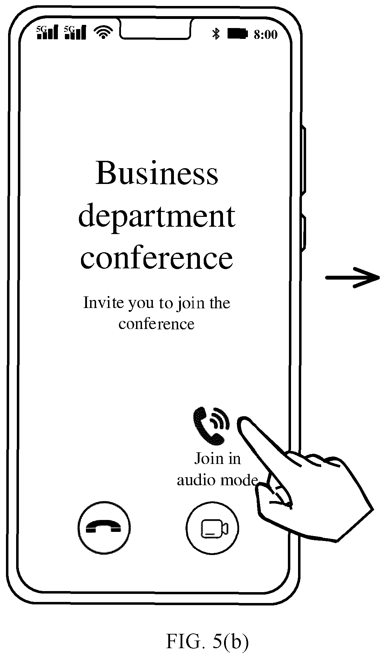

As shown in FIG. 5(b), in the conference control interface, a conference subject name (for example, Business department conference), an icon "Join in audio mode", an icon "Join in video mode", and an icon "Decline to join". After detecting an operation of the user on the icon "Join the audio" or the icon "Join the video", the mobile phone joins the conference. After an operation of the user on the icon "Decline to join" is detected, the conference is declined. After the user controls the mobile phone to join the conference by operating the icon "Join the audio", the mobile phone collects only voice information of the user, but does not collect graphic information. After the user controls the mobile phone to join the conference by operating the icon "Join the video", the mobile phone collects both voice information and graphic information of the user. After detecting an operation of the user on the icon "Join the audio", the mobile phone displays a conference interface.

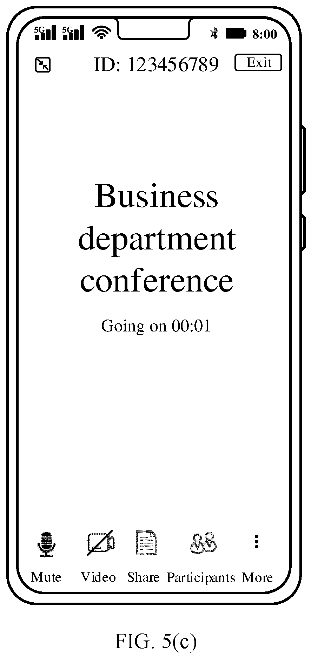

Refer to FIG. 5(c). In the conference interface, a conference ID, a conference name, a conference length, and a conference control icon (also referred to as a conference control).

However, in the foregoing embodiments, when the conference starts, the user needs to perform a plurality of control operations on the mobile phone to join the conference, while the operations are relatively complex, causing poor user experience. Therefore, in this embodiment, a method for joining a conference may be used to quickly join a scheduled conference.

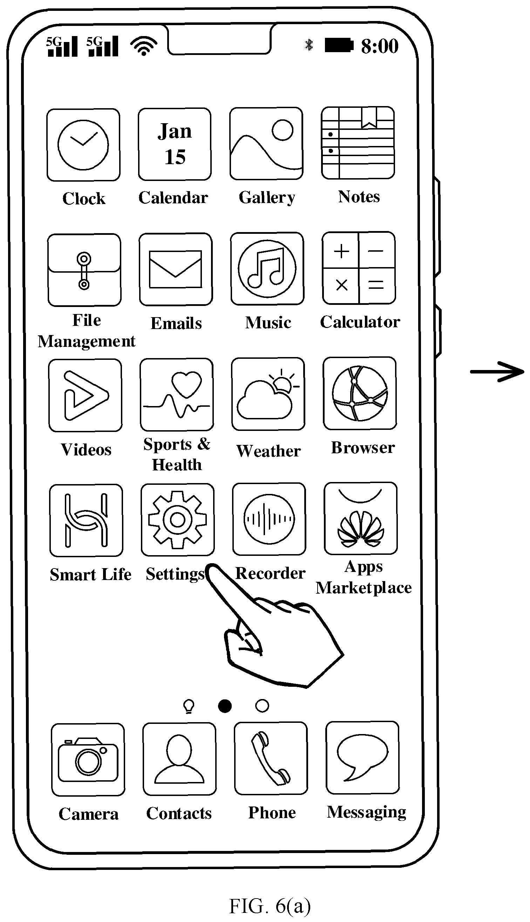

The method for joining a conference provided in this embodiment is controlled and implemented by the conference control module 1201 that is preset on the mobile phone, and is performed based on the fact that the mobile phone has set a conference mode. Generally, a conference mode is not set in the factory settings of a mobile phone, and a user needs to set the conference mode. A process of setting the conference mode is described below in detail with reference to FIG. 6(a) to FIG. 6(d).

Refer to FIG. 6(a). Icons of various applications, including icons such as "Clock", "Calendar", "Photos", "Settings", "Browser", and "Smart Life", are displayed on a desktop of a mobile phone. After detecting an operation of a user on the icon "Settings" on the desktop of the mobile phone, the mobile phone displays a setting interface.

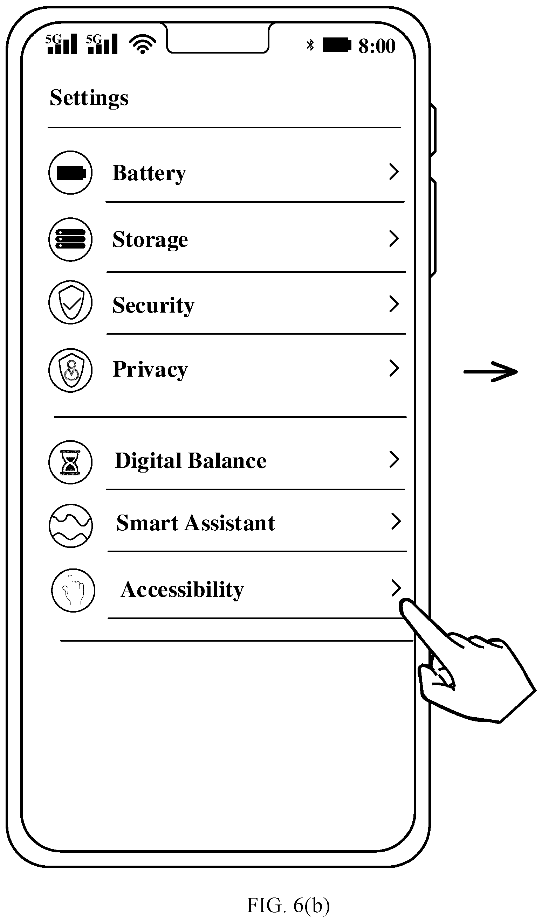

Refer to FIG. 6(b). In the setting interface, setting options such as "Battery", "Storage", "Security", "Privacy", "Digital Balance", "Smart Assistant", and "Accessibility" are included. After detecting an operation of the user on the setting option "Accessibility", the mobile phone enters an accessibility setting interface.

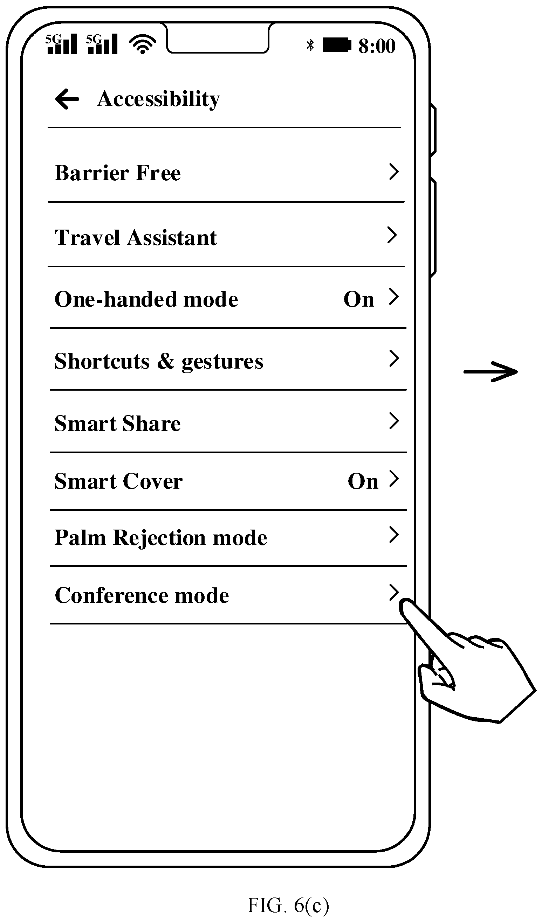

Refer to FIG. 6(c). In the accessibility setting interface, setting options such as "Barrier Free", "Travel Assistant", "One-handed mode", and "Conference mode". After the mobile phone detects an operation of the user on the setting option "Conference mode", the mobile phone enters a conference mode setting interface.

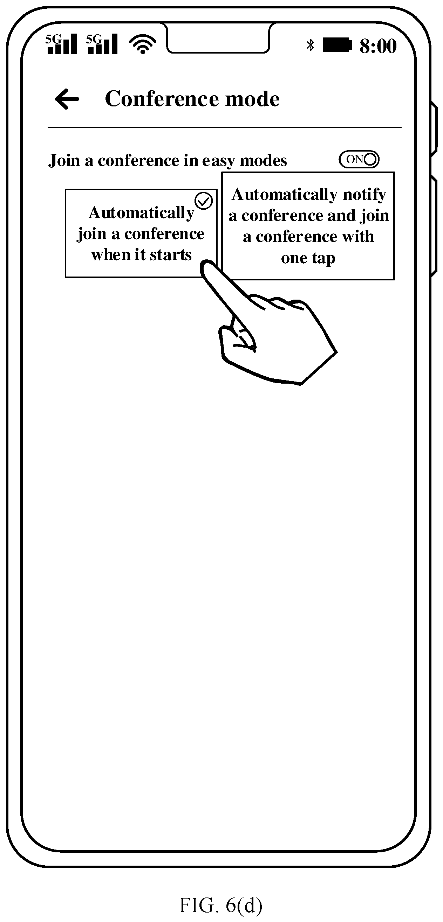

Refer to FIG. 6(d). In the conference mode setting interface, two conference modes are provided. One is "Automatically join a conference when it starts", and the other is "Automatically notify a conference and join a conference with one tap". The user may select any of the conference modes. After the conference mode is determined, the mobile phone uses this conference mode to control the conference.

After conference mode setting is completed, the mobile phone collects and collects statistics on, by using the conference control module 1201, conference scheduling information of each conferencing application installed on the mobile phone. For example, refer to Table 1. The mobile phone may obtain the conference scheduling information (further including conference scheduling information in a short message or an email) of each conferencing application, and generate a conference scheduling information list. The list may include content, for example, a conference time, a conference subject name, conference identifier (identification, ID) information, a corresponding conferencing application, conference importance, and a conference convener. The conference scheduling information in the conference scheduling information list may be sorted in a sequence of a conference time, importance, or the like. The mobile phone automatically joins a conference in the sequence of a conference time, or guides the user to join the conference with a one-tap operation.

**Table 1 Conference scheduling information list**

| Conference time | Conference subject name | Conference ID | Conferencing application | Importance |
|---|---|---|---|---|
| 1/1 08:00 - 09:00 | Business department conference | ID1 | Conferencing application 1 | Important |
| 1/1 08:00 - 08:30 | Sectional conference | ID2 | Conferencing application 2 | Less important |
| 1/1 08:30 - 09:00 | Project progress discussion | ID3 | Conferencing application 3 | Important |
| 1/3 14:00 - 14:30 | Weekend team-building discussion | ID4 | Conferencing application 1 | Less important |
| 1/4 16:00 - 17:00 | Training conference | ID5 | Conferencing application 2 | Important |
| ... | ... | ... | ... | ... |

It should be noted that, after a conferencing application detects an update of conference scheduling information, the conferencing application sends updated conference scheduling information to the conference control module 1201, so that the conference control module 1201 updates the conference scheduling information list. For example, after a user modifies a time of the "business department conference" from 08:00 - 09:00 to 09:00 - 10:00 in the conferencing application 1, the conference control module 1201 further updates the conference time of the "business department conference" in Table 1 to 09:00 - 10:00 correspondingly.

After a conference is canceled, a corresponding conferencing application may send a conference cancellation notification to the conference control module 1201. The conference cancellation notification may include unique identifier information of the conference, for example, a conference ID. After receiving the conference cancellation notification, the conference control module 1201 deletes conference scheduling information of the conference from the conference scheduling information list.

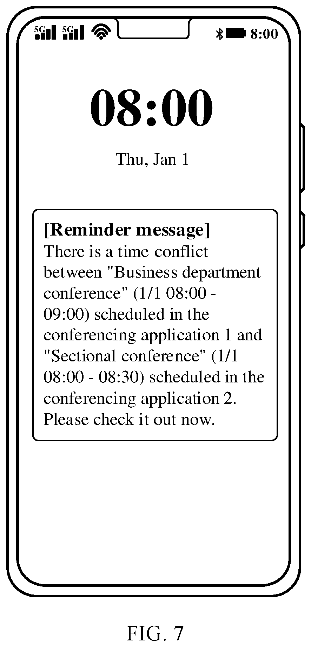

In addition, when there is a time conflict between conferences, the mobile phone may remind the user to change a conference time by using a conference conflict notification. A conference conflict means that conference time of at least two conferences overlap, and start time of the conferences that conflict with each other may be the same or may be different. For example, in Table 1, the time of the "business department conference" is 1/1 08:00 - 09:00, while the time of the "sectional conference" is 1/1 08:00 - 08:30. There is a conflict between the time of the two conferences. Based on this, for example, refer to FIG. 7. The mobile phone may display the conference conflict notification "There is a time conflict between 'Business department conference' (1/1 08:00 - 09:00) scheduled in the conferencing application 1 and 'Sectional conference' (1/1 08:00 - 08:30) scheduled in the conferencing application 2. Please check it out now".

Processes of the mobile phone joining a conference in the conference modes of "Automatically join a conference when it starts" and "Automatically notify a conference and join a conference with one tap" separately are described below.

### (1) Automatically join a conference when the conference starts

In the conference mode of "Automatically join a conference when it starts", after detecting that a conference starts (or a preset time, for example, one minute in advance), the mobile phone automatically sends a conference joining instruction to a corresponding conferencing application to automatically join the conference. The joining instruction includes unique identifier information (for example, a conference ID) of the conference, so that the conferencing application identifies the to-be-joined conference. After receiving the conference joining instruction, the conferencing application directly initiates a conference joining request to a corresponding conference server to join the corresponding conference.

In addition, the conferencing application further feeds back conference status information, for example, that conference joining is successful, a conference is going on, or a conference is ended, to the conference control module 1201 in real time. The conference control module 1201 may decide, based on the conference status information, on control over another conference, for example, whether to join a new conference.

In some embodiments, before automatically joining a conference, the mobile phone may display one piece of reminder information to remind a user that the mobile phone is about to automatically join the conference. The reminder information may include at least one piece of content, for example, a conference subject name, a conference ID, and a conference time, and may further include countdown information.

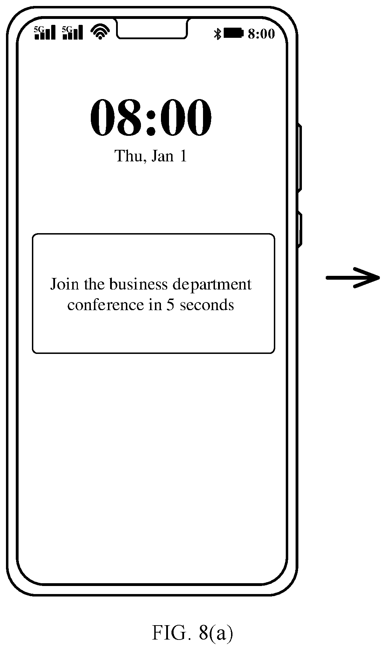

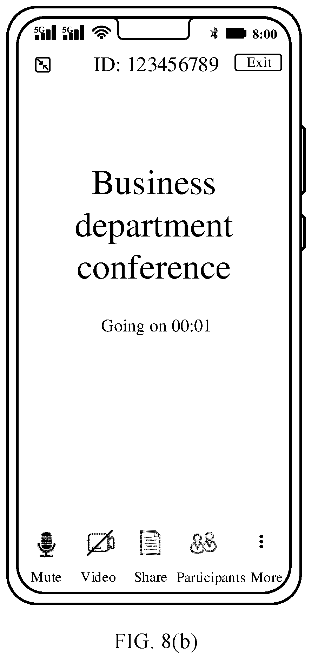

The "business department conference" scheduled by the user in the conferencing application 1 is used as an example. Refer to FIG. 8(a). When the conference time comes, the mobile phone may display reminder information "Join the business department conference after 5 seconds", and start a 5-second countdown. After the countdown ends, the mobile phone automatically controls the conferencing application 1 to join the "business department conference", and directly displays a conference interface, for example, as shown in FIG. 8(b).

In some embodiments, when the conference time comes, the mobile phone automatically sends the conference joining instruction to the corresponding conferencing application if a preset condition is satisfied, to control the conferencing application to automatically join the conference. The preset condition may be: that the mobile phone is unlocked is detected, the user is operating the mobile phone, the mobile phone is connected to a Bluetooth headset and the Bluetooth headset is currently worn by the user, the mobile phone is connected to a smart watch, or the like. If the mobile phone does not satisfy the conference condition, when the conference time comes, the conference is joined by using the conference mode "Automatically notify a conference and join a conference with one tap". Details are provided in the following descriptions.

The mobile phone automatically joins the conference based on conference information collected in the conference scheduling information list. If there is a time conflict between two or more conferences, the mobile phone automatically joins a conference according to a preset rule.

In some embodiments, for conflicting conferences that start at a same time, the mobile phone may select, based on importance of the conferences, to automatically join a more important conference. The "business department conference" (1/1 08:00 - 09:00, important conference) and the "sectional conference" (1/1 08:00 - 08:30, less important conference) in Table 1 are used as examples. At 1/1 08:00, because the "business department conference" is more important, the mobile phone automatically joins the "business department conference".

If both conference start time and importance of the conflicting conferences are the same, according to a sequence of the conferences in the conference scheduling information list, a topmost conference in the conference scheduling information list is automatically joined. Alternatively, based on a priority of a conferencing application corresponding to a conference, a conference corresponding to a conferencing application of higher priority is automatically joined. For example, the priority of the conferencing application may be preconfigured. For example, priorities of the conferencing applications, the conferencing application 1, the conferencing application 2, and the conferencing application 3, may be ranked in descending order.

In some embodiments, for conflicting conferences that start at different time, in a process of the mobile phone joining a conference, when another conference starts, the mobile phone may ask the user whether to switch from the conference to the another conference. The user may select whether to switch to the another conference as needed. If the user selects to switch to the another conference, the mobile phone exits the current conference and automatically joins the another conference. If the user does not select to switch to the another conference, the user continues to be in the current conference.

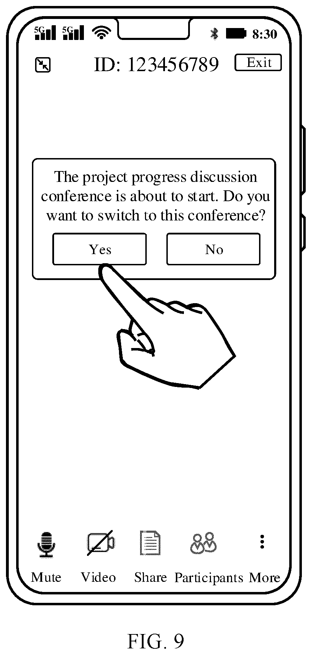

The "business department conference" (1/1 08:00 - 09:00) and the "project progress discussion" (1/1 08:30 - 09:00) in Table 1 are used as examples. In a process of the "business department conference" on the mobile phone, at 1/1 08:30, the mobile phone may display reminder information, for example, as shown in FIG. 9. The reminder information includes "The project progress discussion conference is about to start. Do you want to switch to this conference?" and is used to control an icon "Yes" for switching to a conference and an icon "No" for continuing to be in a current conference. After detecting an operation of the user on the icon "Yes", the mobile phone exits the current "business department conference" and joins the "project progress discussion" conference. After detecting an operation of the user on the icon "No", the mobile phone does not perform conference switching, and continues to be in the current "business department conference".

In some embodiments, when the mobile phone is connected to a Bluetooth headset, the mobile phone may establish an SCO link with the Bluetooth headset in a process of automatically joining a conference. The SCO link may be used to transmit audio information (for example, a call voice or a voice prompt) during a conference. For example, when automatically joining a conference, the mobile phone may control the Bluetooth headset to play a first voice message, to remind the user that the mobile phone is about to automatically join the conference. After joining the conference successfully, the mobile phone may control the Bluetooth headset to play a second voice message, to remind the user that the mobile phone has joined the conference. The "business department conference" is used as an example. The first voice message may be "Automatically join the business department conference in 5 seconds. Please get ready for the conference", and the second voice message may be "You've joined the business department conference".

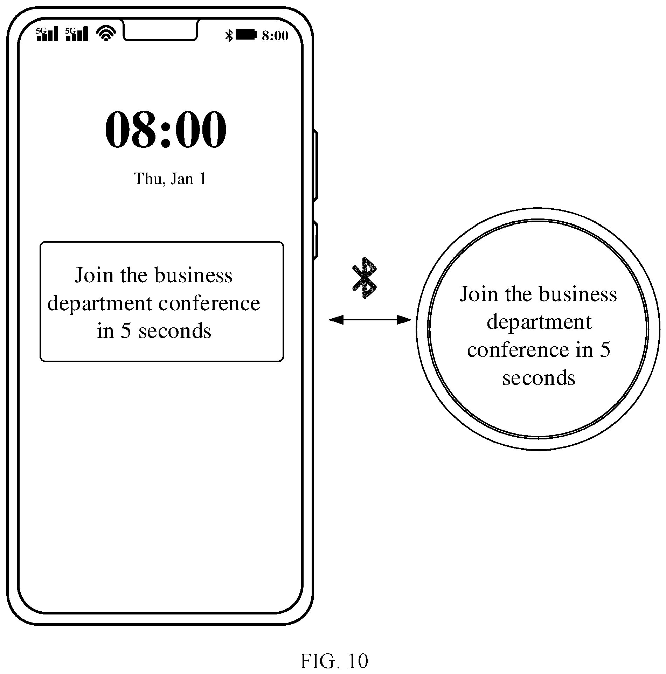

In some embodiments, when the mobile phone is connected to a smart watch, before automatically joining a conference, the mobile phone may send reminder information to the watch, to remind the user that the mobile phone is about to automatically join the conference. For example, the reminder information may be reminder information "Join the business department conference in 5 seconds" in FIG. 10. After the user successfully joins the conference, in a watch face of the smart watch, a conference control is displayed. In addition, the watch may be further controlled to vibrate or ring to remind the user to join the conference soon.

In the conference mode "Automatically join a conference when it starts", the mobile phone can automatically join a conference at a scheduled conference start time or at a time preset in advance, without a user operation, thereby offering more convenience of joining a conference, helping a user avoid missing the conference to some degree, and providing better user experience.

### (2) Automatically notify a conference and join a conference with one tap

In the conference mode of "Automatically notify a conference and join a conference with one tap", after detecting that a conference starts (or a preset time, for example, one minute in advance), the mobile phone displays a conference notification, where the message is used to ask a user whether to join the conference, and includes a first control and a second control. After detecting an operation of the user on the first control, the mobile phone directly displays a conference interface for the conference. After detecting an operation of the user on the second control, the mobile phone closes the conference notification. When joining the conference, the mobile phone sends a conference joining instruction to a corresponding conferencing application, to control the conferencing application to join the conference. The joining instruction includes unique identifier information (for example, a conference ID) of the conference, so that the conferencing application identifies the to-be-joined conference. After receiving the joining instruction, without any further user operation, the conferencing application directly initiates a conference joining request to a corresponding conference server to join the corresponding conference.

In addition, the conferencing application further feeds back conference status information, for example, that conference joining is successful, a conference is going on, or a conference is ended, to the conference control module 1201 in real time. The conference control module 1201 may decide, based on the conference status conference, on control over another conference, for example, whether to join a new conference.

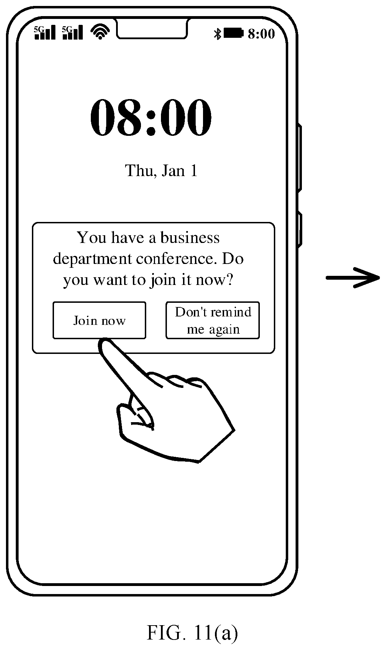

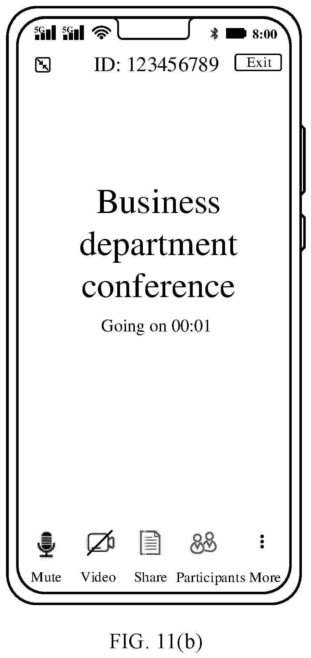

The "business department conference" in Table 1 is used as an example. Refer to FIG. 11(a). When the conference starts, the mobile phone displays a conference notification, where the conference notification includes reminder information "You have a business department conference. Do you want to join it now?" In addition, the message further includes a first control, an icon "Join now", and a second control, an icon "Don't remind me again". After the mobile phone detects an operation of the user on the icon "Join now", the mobile phone joins the "business department conference" immediately, and displays a conference interface for the conference (for example, as shown in FIG. 11(b)). After the mobile phone detects an operation of the user on the icon "Don't remind me again", the mobile phone does not join the "business department conference", deletes information about the conference from the conference scheduling information list, and no longer displays the conference notification. However, in the conferencing application 1, the user may still join this "business department conference" through a manual operation.

The mobile phone controls display of the conference notification based on conference information collected in the conference scheduling information list. If there is a time conflict between two or more conferences, the mobile phone may display conference notification according to a preset rule.

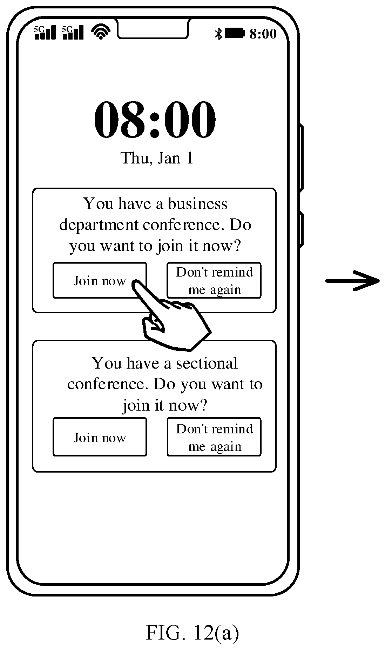

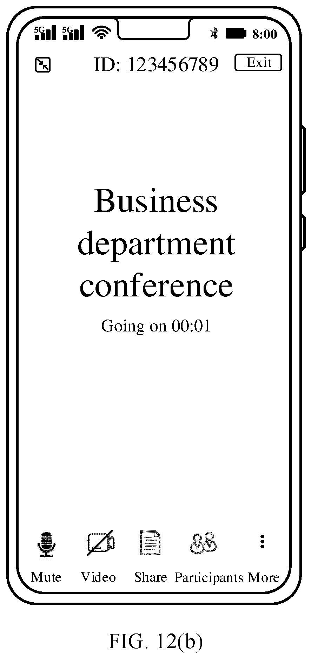

In some embodiments, for conflicting conferences that start at a same time, the mobile phone may separately display one conference notification for each conference, so that the user selects a conference to join as desired. For example, as shown in FIG. 12(a), the mobile phone may separately display one conference notification for each of the conflicting "business department conference" and the "sectional conference". After the mobile phone detects an operation of the user on the first control, the icon "Join now", in the conference notification for the "business department conference", the mobile phone joins the "business department conference" immediately, and displays a conference interface for the "business department conference", for example, as shown in FIG. 12(b).

In some embodiments, for conflicting conferences that start at different time, in a process of the mobile phone joining a conference, when another conference starts, for example, as shown in FIG. 9 in this case, the mobile phone may ask the user whether to switch from the conference to the another conference. If the user selects to switch to the another conference, the mobile phone exits the current conference and joins the another conference. If the user does not select to switch to the another conference, the user continues to be in the current conference.

In some embodiments, when the mobile phone is connected to a Bluetooth headset, when displaying a conference notification, the mobile phone may control the Bluetooth headset to play a third voice message, to remind the user to join the conference. After joining the conference successfully, the mobile phone may control the Bluetooth headset to play a second voice message, to remind the user that the mobile phone has joined the conference. The "business department conference" is used as an example. The third voice message may be "It's the conferencing time for the business department conference, please perform an operation on the mobile phone to join the conference", and the second voice message may be "You've joined the business department conference".

In addition, in response to the operation of the user on the first control (that is, an operation of joining a conference), the mobile phone may establish an SCO link with the Bluetooth headset, to transmit audio information (for example, a call voice or a voice prompt) through the SCO link during the conference after successfully joining the conference.

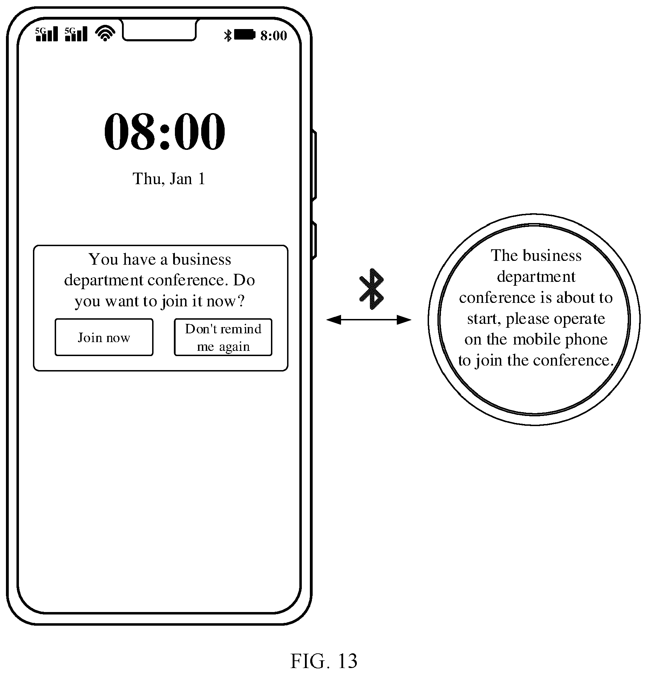

In some embodiments, when the mobile phone is connected to a smart watch, before automatically joining a conference, the mobile phone may send reminder information to the watch, to remind the user to join the conference. For example, refer to FIG. 13. The reminder information may be "The business department conference is about to start, please perform an operation on the mobile phone to join the conference". In addition, the mobile phone may further control the watch to vibrate or ring to remind the user to join the conference.

In the conference mode "Automatically notify a conference and join a conference with one tap", the mobile phone can remind a user to join a conference at a scheduled conference start time or at a time preset in advance, and guide the user to join the conference with a one-tap operation, thereby offering more convenience of joining a conference and providing better user experience.

At present, a mobile phone generally controls a conference only based on an operation entered by a user in an interface of the mobile phone, including control over joining/exiting a conference, or control over various settings during a conference (for example, mute/unmute in the conference, start/stop a video, and the like). A process of controlling various settings during a conference is described below.

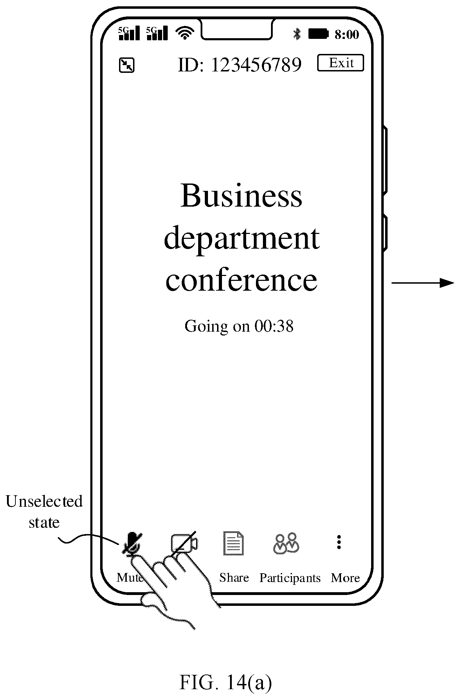

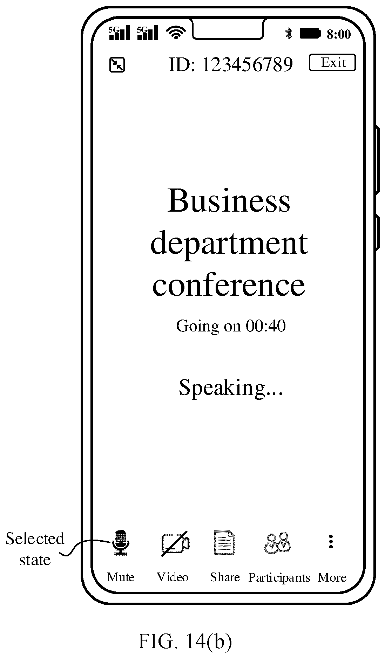

In an example, refer to FIG. 14(a). An icon "Mute" in a conference interface of a mobile phone is in an unselected state, and a conference is in a muted mode. After detecting an operation of the user on the icon "Mute" in the conference interface, the mobile phone switches the conference to be in an unmuted mode from the muted mode, and displays the icon "Mute" as in a selected state, for example, as shown in FIG. 14(b). It should be noted that, in the muted mode, a microphone (mic) of the mobile phone or the Bluetooth headset is in off, or the mobile phone does not upload voice data collected by the mic to a conferencing application server. In the unmuted mode, the mic of the mobile phone or the Bluetooth headset is on, and the mobile phone may upload audio data collected by the mic to the conferencing application server, so that the user may send voice data by using the mic.

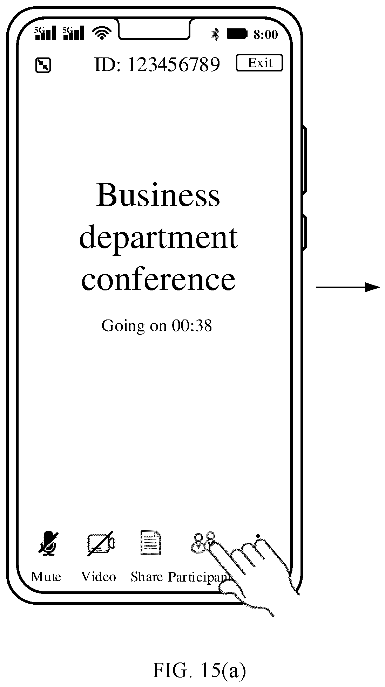

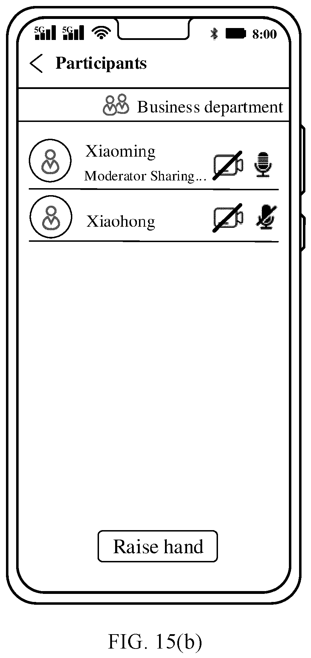

In another example, refer to FIG. 15(a). After detecting an operation of the user on the icon "Participants" in the conference interface, the mobile phone displays a participant interface, for example, as shown in FIG. 15(b). In the participant interface, information related to a participant, for example, a name, information about a moderator, and whether a microphone or a camera is enabled, is included, so that the user can view the information.

It can be understood that, when the user is far away from the mobile phone, it is inconvenient for the user to enter a control operation in the conference interface of the mobile phone to control the conference, resulting in low efficiency of conference control and poor user experience. Therefore, an embodiment of this application provides a device control method, so that a conference on an electronic device can be controlled by using a wearable device, to improve user experience.

In this embodiment, the wearable device may be a generic term for wearable devices that are developed by applying a wearable technology to use intelligent design in daily wear, for example, a Bluetooth headset, a smart watch, smart glasses, a smart glove, and smart footwear and clothing. A specific form of the wearable device is not limited in this embodiment.

The device control method provided in this embodiment is described below by using an example in which the wearable device is a Bluetooth headset.

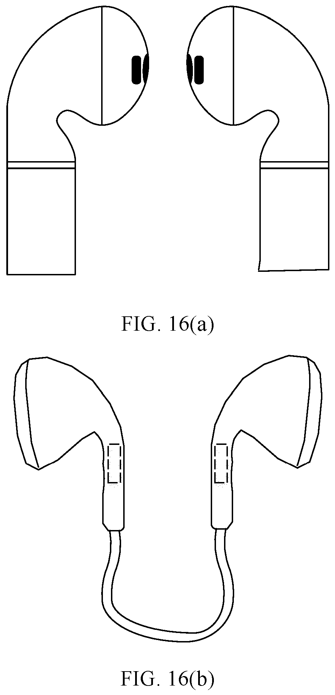

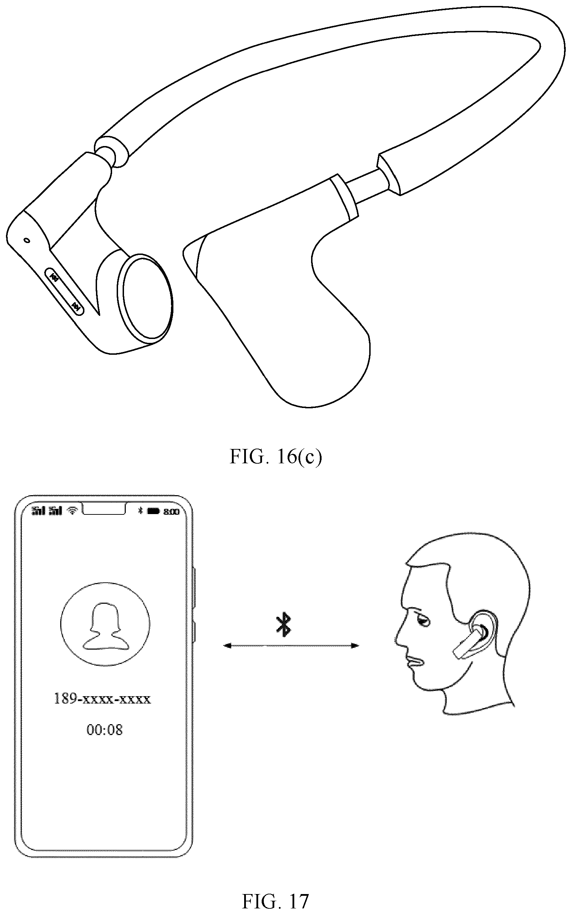

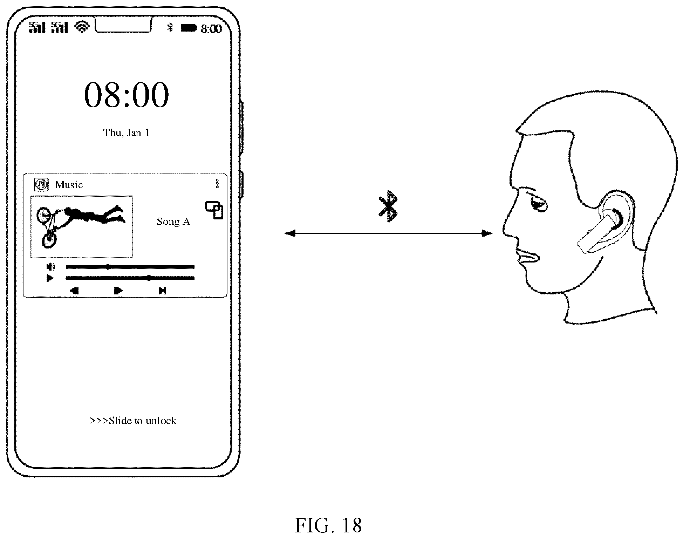

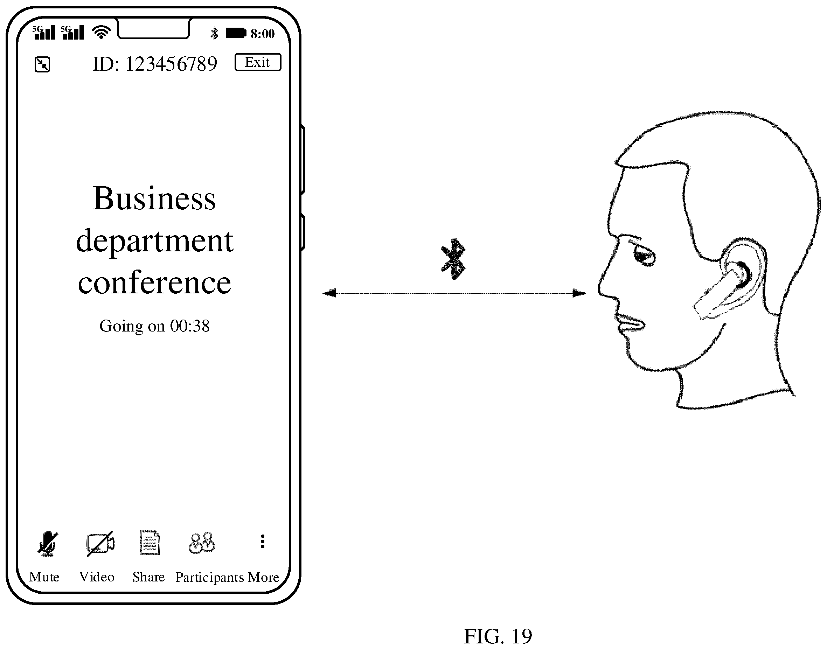

A Bluetooth headset is a common short-range wireless communication device. In this embodiment, the Bluetooth headset may be a true wireless stereo (true wireless stereo, TWS) Bluetooth headset, for example, as shown in FIG. 16(a), or may be a neckband Bluetooth headset, for example, as shown in FIG. 16(b) or FIG. 16(c). A specific structure of the Bluetooth headset is not limited in this embodiment. The Bluetooth headset can be used together with the mobile phone to assist the mobile phone in making an audio call (for example, as shown in FIG. 17), playing audio and videos (for example, as shown in FIG. 18), or joining an online conference (for example, as shown in FIG. 19).

To facilitate the user to control the mobile phone by using the Bluetooth headset, some shortcut user control operations (shortcut operations for short) are configured on the Bluetooth headset for controlling the mobile phone. A TWS Bluetooth headset, FreeBuds3, is used as an example. Based on a pre-configuration of FreeBuds3, in some embodiments, a shortcut operation "Tap the left headphone twice" may be used to control the mobile phone to answer or end a call, and a shortcut operation "Tap the right headphone twice" may be used to control a music application to play a next piece of music.

In some embodiments, there are only a few shortcut operations that are configured on the Bluetooth headset and that are suitable for the user to use. For example, there are only "Tap the left headphone twice" and "Tap the right headphone twice", and each of the shortcut operations can be used to control the mobile phone only when the mobile phone is in a specific operating mode. For example, "Tap the left headphone twice" can be used to control the mobile phone to answer or end a call only when the mobile phone is in an audio call mode. However, the mobile phone has various operating modes, for example, an audio call mode, an audio and video mode, and a conference mode. When the mobile phone enters another mode, the Bluetooth headset is not able to control the mobile phone with a shortcut operation. For example, when the mobile phone enters the conference mode, a conference on the mobile phone cannot be controlled with the shortcut operation "Tap the left headphone twice".

In some other embodiments, a same shortcut operation for the Bluetooth headset can control the mobile phone to execute a similar control instruction. For example, the shortcut operation "Tap the left headphone twice" can simultaneously control the mobile phone to answer or end a call, and join or exit a conference. However, during a conference, an operation commonly performed by a user is joining or exiting the conference, but muting/unmuting, starting/stopping a video, and the like. Therefore, this manner of control may cause a user to exit a conference due to a misoperation, and consequently, the user misses conference information.

It can be understood that, in either of the foregoing manners, the Bluetooth headset cannot effectively and properly control the mobile phone, especially a conference on the mobile phone. Therefore, an embodiment of this application provides a device control method that relates to how to use a same control operation on a Bluetooth headset side to control a mobile phone in different operating modes, and in particular, to how to control a conference on a mobile phone.

It should be noted that, before a mobile phone and a Bluetooth headset execute the device control method provided in this embodiment, the mobile phone generally needs to set a shortcut operation for the Bluetooth headset side according to a user instruction. Otherwise, the Bluetooth headset controls the mobile phone with default settings.

FreeBuds3 is used as an example below to describe a process of setting a shortcut operation for a Bluetooth headset. In this embodiment, a shortcut operation may be set in setting options on a mobile phone, or may be set in an application (for example, an application Smart Life) associated with the Bluetooth headset.

First, it should be noted that, in this embodiment, an operating mode of the mobile phone and the Bluetooth headset includes a first mode and a second mode, where the first mode and the second mode are different. In this embodiment, for example, the first mode may also be referred to as a normal mode, for example, an audio call mode or an audio and video mode. The second mode may be a conference mode.

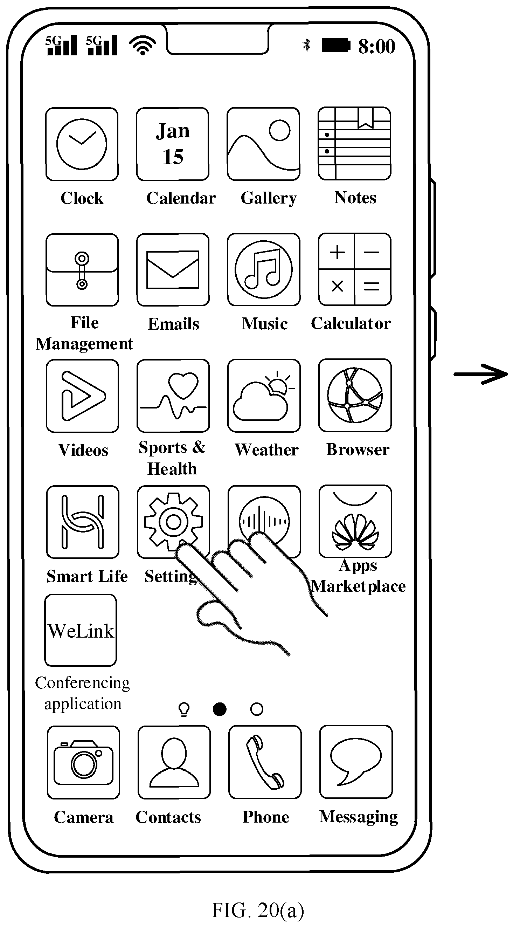

FIG. 20(a) to FIG. 20(g) are a schematic flowchart of setting a shortcut operation according to an embodiment of this application, showing a process of setting a shortcut operation for a Bluetooth headset in setting options on a mobile phone after the mobile phone is connected to the Bluetooth headset via Bluetooth.

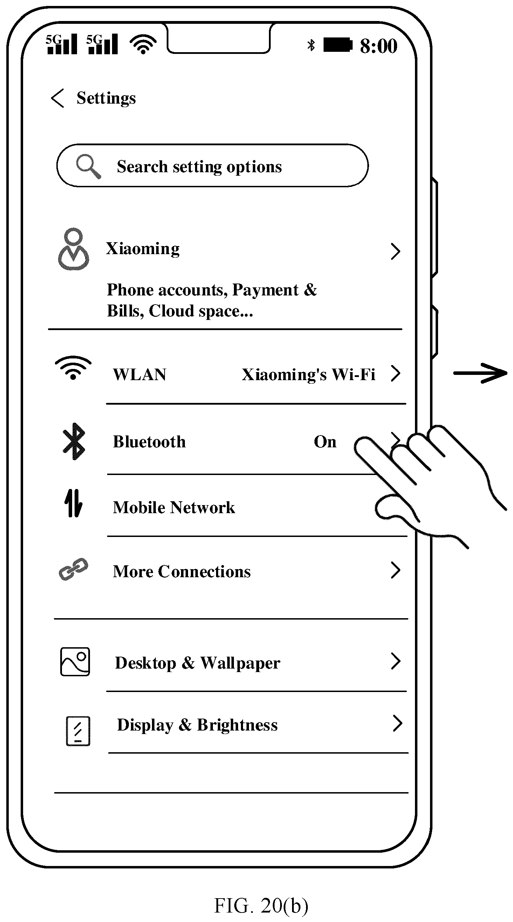

Refer to a home screen interface (that is, a mobile phone desktop) shown in FIG. 20(a). In the home screen interface, an icon "Settings" is included. After the mobile phone detects an operation of a user on the icon "Settings", the mobile phone displays a setting interface on the mobile phone, for example, as shown in FIG. 20(b). The setting interface on the mobile phone includes a setting option "Account", a setting option "Wireless local area network" (wireless local area network, WLAN), a setting option "Bluetooth", a setting option "Mobile network", a setting option "Desktop and wallpaper", a setting option "Display and brightness", and the like.

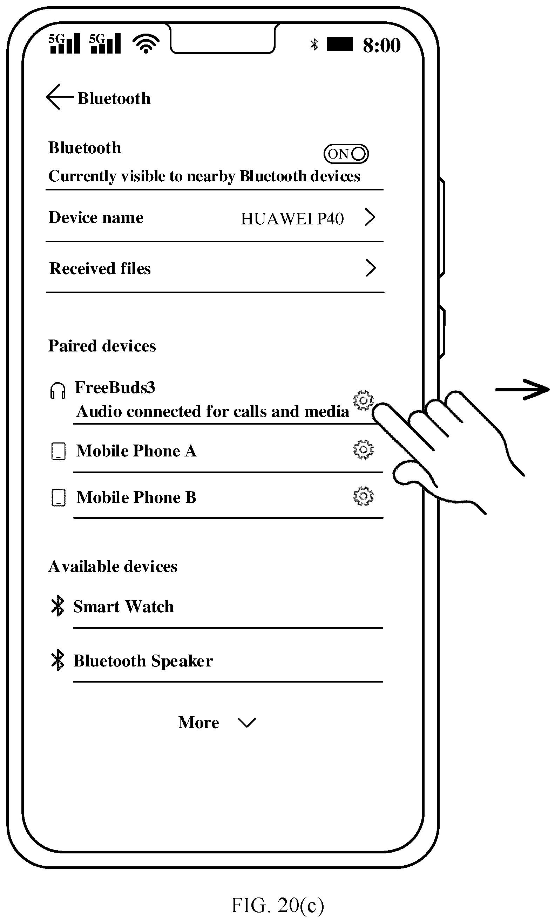

Refer to FIG. 20(b). After detecting an operation of the user on the setting option "Bluetooth" in the setting interface on the mobile phone, the mobile phone displays a Bluetooth setting interface, for example, as shown in FIG. 20(c).

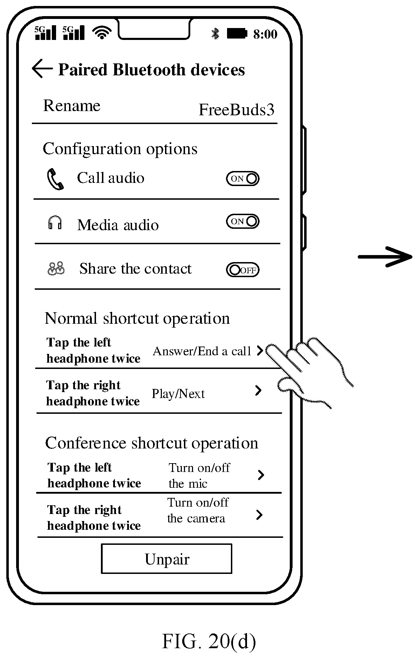

Refer to FIG. 20(c). In the Bluetooth setting interface, basic information about a Bluetooth device (that is, a paired device) that has been paired with the mobile phone and basic information about a Bluetooth device (that is, an available device) that can be found by the mobile phone but has not been paired are included. For example, the basic information about the Bluetooth device includes a device name, for example, "FreeBuds3". After detecting an operation of the user on an icon "Set" for FreeBuds3 in the Bluetooth setting interface, the mobile phone displays a FreeBuds3 setting interface, for example, as shown in FIG. 20(d).

In addition, refer to FIG. 20(c). The paired device includes a connected device and an unconnected device, for example, the device FreeBuds3 currently connected to the mobile phone, and unconnected devices that are mobile phone A and mobile phone B. A user may set the connected device.

Refer to FIG. 20(d). In the FreeBuds3 setting interface, a configuration option for FreeBuds3, for example, a call audio setting option, a media audio setting option, and a contact sharing setting option, is included. In addition, a shortcut operation setting option for FreeBuds3 in different operating modes is further included, for example, a setting option "Normal shortcut operation" and a setting option "Conference shortcut operation", and each of the shortcut operation setting options includes a left headphone setting option and a right headphone setting option.

It should be noted that, in this embodiment, the normal mode of the mobile phone corresponds to the normal shortcut operation for the Bluetooth headset. The conference mode of the mobile phone corresponds to the conference shortcut operation for the Bluetooth headset. The mobile phone sets, according to a user instruction, a control instruction corresponding to a normal shortcut operation for the Bluetooth headset, specifically as shown below.

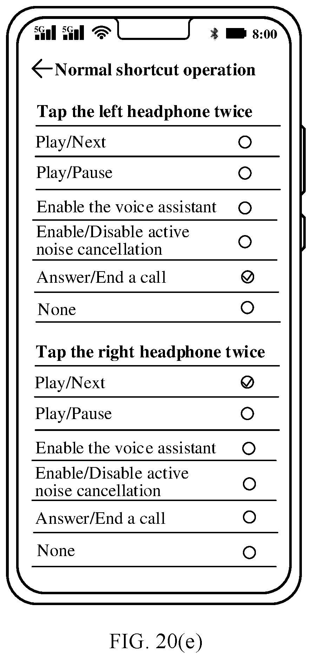

Refer to FIG. 20(d). When detecting an operation of the user to edit "Normal shortcut operation", the mobile phone displays a normal shortcut operation setting interface, for example, as shown in FIG. 20(e). In the setting interface, shortcut operations include "Tap the left headphone twice" and "Tap the right headphone twice", and control instructions corresponding to the two shortcut operations each include "Play/Next", "Play/Pause", "Enable the voice assistant", "Enable/Disable active noise cancellation", "Answer/End a call", and "None".

"Play/Next" is used to control the mobile phone to play paused audio information, or switch from audio information that is being played to a next piece. "Play/Pause" is used to control the mobile phone to play paused audio information, or pause audio information that is being played. "Enable the voice assistant" is used to enable a voice assistant on the mobile phone, for example, the voice assistant Xiaoyi. "Enable/Disable active noise cancellation" is used to disable an active noise cancellation function of the Bluetooth headset when enabled, or enable the active noise cancellation function when disabled. "Answer/End a call" is used to control the mobile phone to answer a call after the mobile phone displays a ringing interface, or end a call during a call. "None" represents that there is no corresponding control instruction.

The mobile phone may set, according to a first user setting of the user, control instructions corresponding to the shortcut operations "Tap the left headphone twice" and "Tap the right headphone twice" in the normal mode to controlling the Bluetooth headset to "Enable/Disable active noise cancellation", or controlling the mobile phone to perform a first action. For example, the first action may be any one of "Play/Next", "Play/Pause", "Enable the voice assistant", "Answer/End a call", or "None".

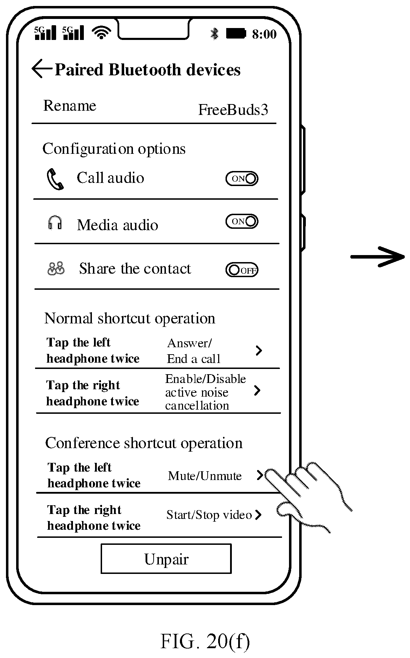

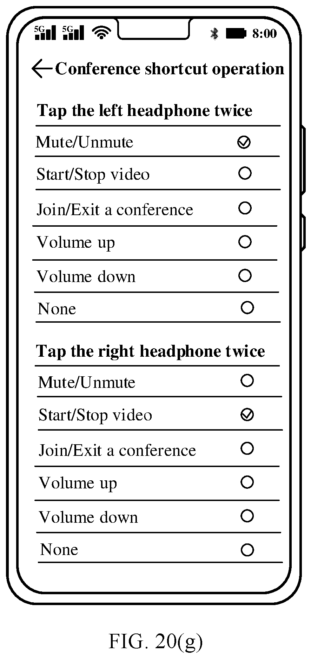

Refer to FIG. 20(f). When detecting an instruction of the user to edit "Conference shortcut operation", the mobile phone displays a conference shortcut operation setting interface, for example, as shown in FIG. 20(g). In the setting interface, shortcut operations also include "Tap the left headphone twice" and "Tap the right headphone twice", and control instructions corresponding to the two shortcut operations each include "Mute/Unmute", "Start/Stop video", "Join/Exit a conference", "Volume up", "Volume down", and "None".

"Mute/Unmute" is used to set a conference to an unmuted mode when the conference is in a muted mode, or set a conference to a muted mode when the conference is in an unmuted mode. "Start/Stop video" is used to set a conference to a non-video state when the conference is in a video mode, or set a conference to a video state when the conference is in a non-video state. "Join/Exit a conference" is used to control the mobile phone to join a conference when the mobile phone has entered the conference mode but has not joined a conference, or to exit a currently joined conference when the mobile phone is in the conference. "Volume up" is used to control the mobile phone or the Bluetooth headset side to turn up a volume. "Volume down" is used to control the mobile phone or the Bluetooth headset side to turn down a volume. "None" represents that there is no corresponding control instruction.

The mobile phone may set, according to a second user setting, each of the control instructions corresponding to the shortcut operations "Tap the left headphone twice" and "Tap the right headphone twice" in the conference mode to controlling the mobile phone to perform a second action. For example, the second action may be any one of "Mute/Unmute", "Start/Stop video", "Join/Exit a conference", "Volume up", "Volume down", or "None".

It should be noted that, in this embodiment, shortcut operations for a left headphone and a right headphone may be the same or may be different, and this is not limited in this embodiment. The first action and the second action may be the same or may be different, and this is specifically determined according to a pre-configuration of the Bluetooth headset and a user setting.

In addition, as a first Bluetooth connection has been established between the mobile phone and the Bluetooth headset, the mobile phone may send, through the first Bluetooth connection, local setting information about a shortcut operation for the Bluetooth headset to the Bluetooth headset for storage.

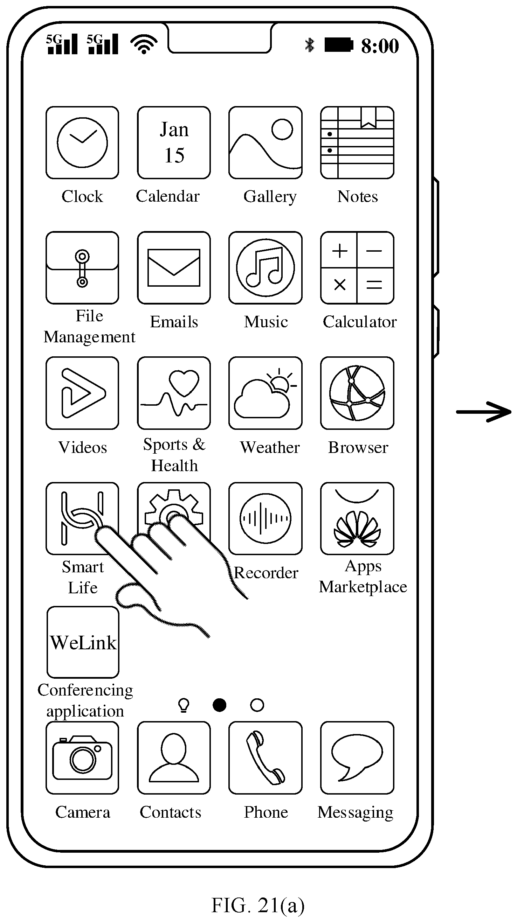

FIG. 21(a) to FIG. 21(g) are a schematic flowchart of setting a shortcut operation according to another embodiment of this application, showing a process of setting a shortcut operation for a Bluetooth headset in an application, Smart Life, on a mobile phone.

Refer to a display interface in FIG. 21(a). In the display interface, an icon of the application Smart Life is included. After detecting an operation of a user on the icon of the application Smart Life in the display interface, the mobile phone displays an application interface, for example, as shown in FIG. 10(b). In the application interface, a plurality of devices that can be controlled by using the mobile phone, for example, a smart refrigerator, an air conditioner A, an air conditioner B, and a Bluetooth headset FreeBuds3, are included.

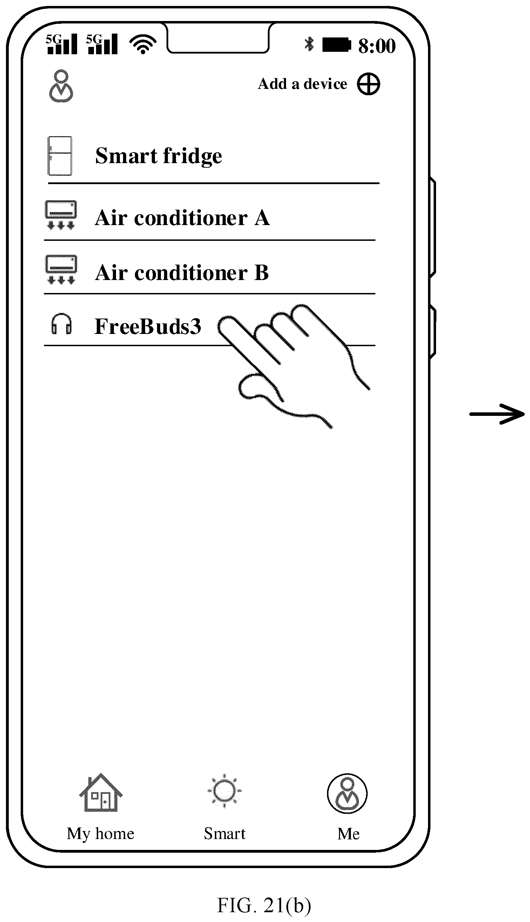

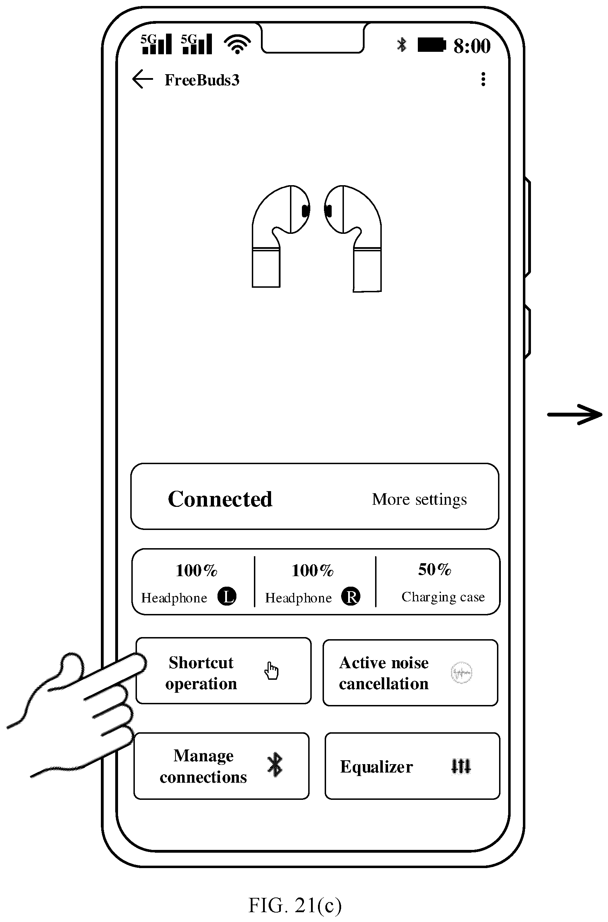

Refer to FIG. 21(b). After detecting an operation of the user on FreeBuds3 in the application interface, the mobile phone displays a FreeBuds3 setting interface, for example, as shown in FIG. 21(c). In the FreeBuds3 setting interface, a setting option "Connected" for FreeBuds3. battery level information of the Bluetooth headset and a charging case, a setting option "Shortcut operation", a setting option "Active noise cancellation", a setting option "Manage connections", and a setting option "Equalizer" are included.

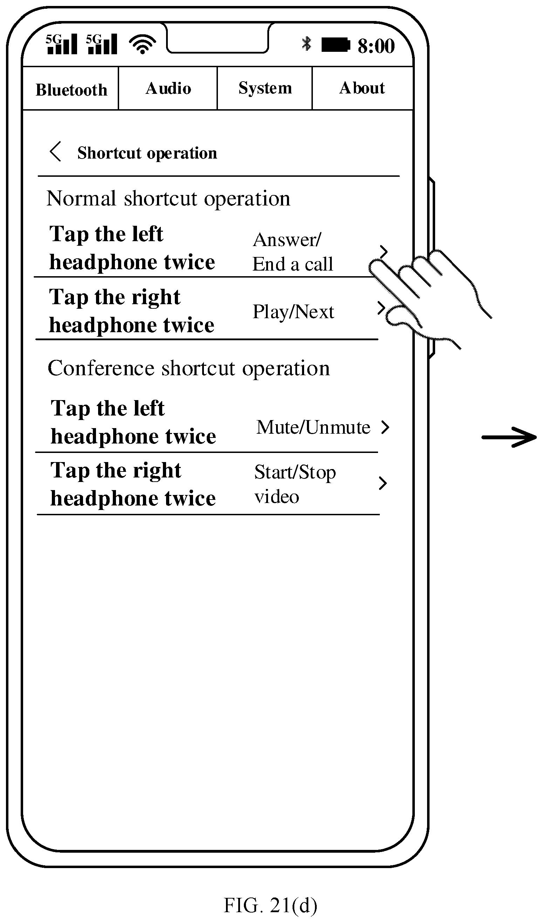

Refer to FIG. 21(c). When detecting an operation of the user on the shortcut operation setting option in the FreeBuds3 setting interface, the mobile phone displays a shortcut operation setting interface, for example, as shown in FIG. 21(d). In the shortcut operation setting interface, a shortcut operation setting option for FreeBuds3 in different operating modes of the mobile phone is included, for example, a setting option "Normal shortcut operation" and a setting option "Conference shortcut operation", and each of the shortcut operation setting options includes a left headphone setting option and a right headphone setting option.

The mobile phone sets a shortcut operation according to a user instruction, specifically as shown below.

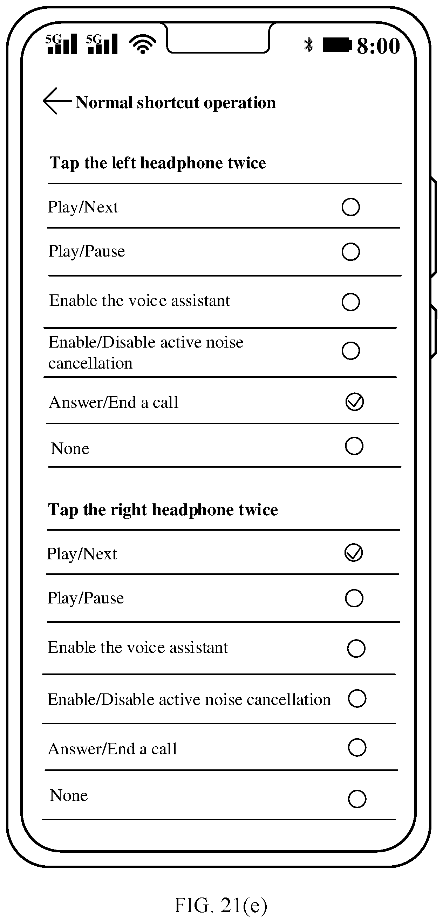

Refer to FIG. 21(d). When detecting an operation of the user on the normal shortcut operation setting option, the mobile phone displays a normal shortcut operation setting interface, for example, as shown in FIG. 21(e). In the interface, shortcut operations include "Tap the left headphone twice" and "Tap the right headphone twice", and control instructions corresponding to the two shortcut operations each include "Play/Next", "Play/Pause", "Enable the voice assistant", "Enable/Disable active noise cancellation", "Answer/End a call", and "None".

The mobile phone may set, according to a first user setting, each of control instructions corresponding to the shortcut operations "Tap the left headphone twice" and "Tap the right headphone twice" in the normal mode to controlling the Bluetooth headset to "Enable/Disable active noise cancellation", or controlling the mobile phone to perform a first action. For example, the first action may be any one of "Play/Next", "Play/Pause", "Enable the voice assistant", "Answer/End a call", or "None".

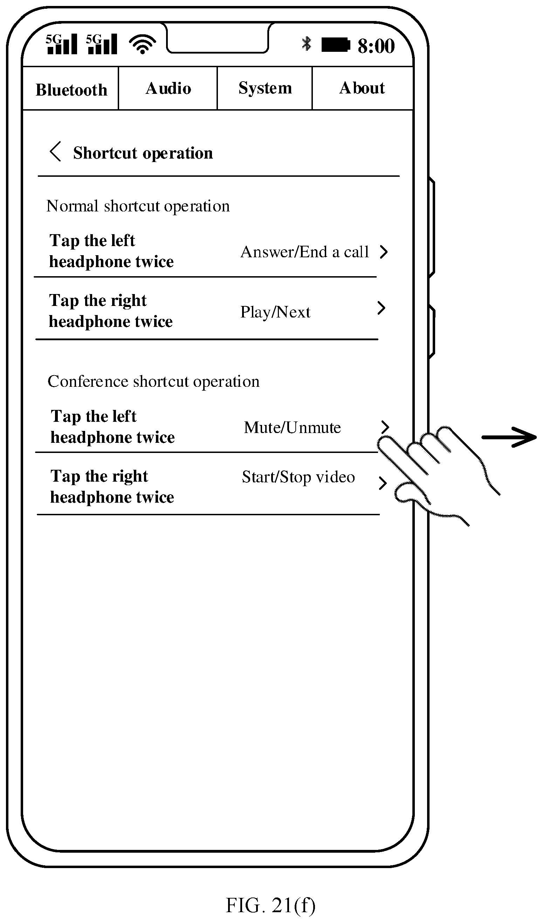

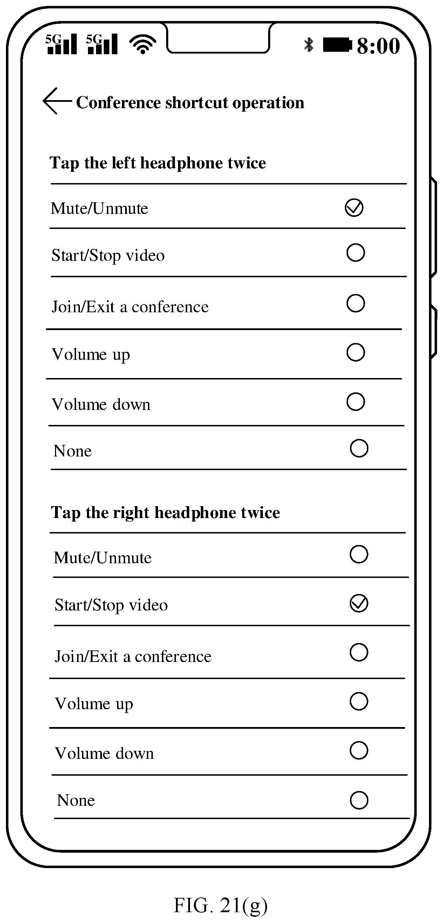

Refer to FIG. 21(f). When detecting an operation of the user on the setting option "Conference shortcut operation", the mobile phone displays a conference shortcut operation setting interface, for example, as shown in FIG. 21(g). In the interface, shortcut operations also include "Tap the left headphone twice" and "Tap the right headphone twice", and control instructions corresponding to the two shortcut operations include "Mute/Unmute", "Start/Stop video", "Join/Exit a conference", "Volume up", "Volume down", and "None".

The mobile phone may set, according to a second user setting, each of the control instructions corresponding to the shortcut operations "Tap the left headphone twice" and "Tap the right headphone twice" in the conference mode to any one of "Mute/Unmute", "Start/Stop video", "Join/Exit a conference", "Volume up", "Volume down", or "None".

It should be noted that, in this embodiment, shortcut operations for a left headphone and a right headphone may be the same or may be different. The first action and the second action may be the same or may be different, and this is specifically determined according to a pre-configuration of the Bluetooth headset and a user setting.

In addition, with reference to FIG. 22, FIG. 22 is a schematic diagram of a structure of a conference control system according to an embodiment of this application. As a Bluetooth connection has been established between the mobile phone and the Bluetooth headset, after setting the shortcut operation for the Bluetooth headset by using the application Smart Life, the mobile phone may directly send setting information about the shortcut operation for the Bluetooth headset to the Bluetooth headset for storage. In addition, the mobile phone may further upload the setting information about the shortcut operation for the Bluetooth headset to an application server for storage, so that after logging in to the application Smart Life by using another electronic device, the user can obtain the setting information about the shortcut operation for the Bluetooth headset.

After the mobile phone completes setting of the shortcut operation for the Bluetooth headset, when working, the Bluetooth headset may control the mobile phone in different operating modes based on a same shortcut operation.

It should be understood that, in a different operating mode of the mobile phone, the Bluetooth headset needs to enter an operating mode corresponding to the operating mode to control the mobile phone. Therefore, a process of determining an operating mode of the Bluetooth headset is described first below.

FIG. 23 is a flowchart of a method for determining an operating mode of a Bluetooth headset according to an embodiment of this application. Specifically, the following steps S2301 to S2304 are included.

S2301: A first Bluetooth connection is established between a mobile phone and a Bluetooth headset.

Specifically, a process of establishing the first Bluetooth connection between the mobile phone and the Bluetooth headset includes the following content.
(1) The mobile phone serves as a master device (that is, a device that initiates a connection) and pages the Bluetooth headset that serves as a slave device (that is, a device that receives a connection). Specifically, after scanning basic information (including a headset address and the like) broadcast by the Bluetooth headset, the mobile phone pages, according to a connection instruction of a user, the Bluetooth headset based on the headset address with frequency hopping. The Bluetooth headset scans external paging at fixed carrier frequency intervals and gives a response after scanning the paging of the mobile phone.
(2) A physical link is established between the mobile phone and the Bluetooth headset according to the link manager protocol (Link Manager Protocol, LMP). The physical link includes an asynchronous connectionless (asynchronous connectionless, ACL) link, and the ACL link is mainly used for transmission of packet data.
   In some embodiments, the mobile phone further needs to establish a synchronous connection oriented link (synchronous connection oriented link, SCO) link based on a service requirement (for example, during an audio call). The SCO is also a physical link that is mainly used for synchronous voice transmission.
(3) A channel link (channel link) is established between the mobile phone and the Bluetooth headset based on the logical link control and adaption protocol (logical link control and adaption protocol, L2CAP).
(4) The mobile phone uses the session description protocol (session description protocol, SDP) to query a profile (Profile) supported by the mobile phone. Profile is a concept specific to Bluetooth protocols. To implement interconnection and interworking between different devices on different platforms, a Bluetooth protocol not only defines a core specification (referred to as Bluetooth core), but also defines various application layer specifications for different application scenarios. These application layer specifications are referred to as Bluetooth profiles. For example, there are an advanced audio distribution profile (advanced audio distribution profile, A2DP), a hands-free profile (hands-free profile, HFP), and an audio/video remote control profile (Audio/Video Remote Control Profile, AVRCP), for establishing a corresponding application connection.

The A2DP profile defines a protocol and a process for transmitting high-quality audio information, for example, mono or stereo audio, on an ACL link. For example, if the A2DP profile is activated between the Bluetooth headset and the mobile phone, an A2DP connection is established between the Bluetooth headset and the electronic device. In this case, the mobile phone may transmit, based on the A2DP connection, high-quality audio information to the Bluetooth headset through the ACL link.

The HFP profile defines a hands-free function protocol, and mainly defines implementations of some functions related to answering/making a call.

For example, if the HFP profile is activated between the Bluetooth headset and the electronic device, an HFP connection is established between the Bluetooth headset and the electronic device. The electronic device may transmit call audio information to the Bluetooth headset based on the HFP through an SCO link, and the Bluetooth headset may control a phone call function of the electronic device, for example, functions such as answering, hanging up, declining, and voice dialing.

The AVRCP defines how to control a feature of streaming media, including pausing, stopping, playback, playing a previous piece, playing a next piece, volume control, and another type of remote control operation.

S2302: The mobile phone and the Bluetooth headset negotiate a conference control capability based on the first Bluetooth connection.

As the conference control capability may be implemented according to a proprietary protocol developed by a same manufacturer of the mobile phone and the Bluetooth headset, when for some reason, for example, manufacturers of the Bluetooth headset and the mobile phone are different, or the Bluetooth headset is of a too early version, one or both of the mobile phone and the Bluetooth headset may not have the conference control capability. Therefore, after the first Bluetooth connection is established, the mobile phone and the Bluetooth headset need to negotiate the conference control capability. That is, the mobile phone and the Bluetooth headset determine whether a local side and a peer side have the conference control capability.

In this embodiment, the conference control capability may be implemented by control with a conference control profile (Profile). The mobile phone may query, according to SDP, whether the Bluetooth headset stores the conference control profile, to determine whether the Bluetooth headset has the conference control capability.

In an example, the mobile phone sends a first indication message to the Bluetooth headset first, where the first indication message is used to indicate that the mobile phone has the conference control capability. After receiving the first indication message, the Bluetooth headset sends a second indication message to the mobile phone if the conference control profile is stored locally, where the second indication message is used to indicate that the Bluetooth headset has the conference control capability. Certainly, the Bluetooth headset may alternatively send the second indication message to the mobile phone first. After receiving the second indication message, the mobile phone sends the first indication message to the mobile phone. By using the first indication message and the second indication message, the mobile phone and the Bluetooth headset can determine whether the local side and the peer side have the conference control capability, and complete the negotiation on the conference control capability.

In this embodiment, if the Bluetooth headset has the conference control capability, the Bluetooth headset can control a conference setting on the mobile phone based on a control operation of a user. If the mobile phone has the conference control capability, the mobile phone can control a conference setting according to a control instruction of the Bluetooth headset during a conference. For example, the Bluetooth headset controls muting in the conference based on a shortcut operation "Tap the left headphone twice" of the user.

It should be noted that, if neither of the mobile phone and the Bluetooth headset has the Bluetooth headset conference control capability, subsequent steps S2303 and S2304 are not performed. If both the mobile phone and the Bluetooth headset have the Bluetooth headset conference control capability, the subsequent steps S2303 and S2304 are performed.

S2303: The mobile phone determines a current operating mode if both the mobile phone and the Bluetooth headset have the conference control capability.

In an example, the mobile phone may determine the operating mode of the mobile phone based on a currently running application. Specifically, when a conferencing application is running on the mobile phone, the operating mode of the mobile phone is a conference mode. However, when an application running on the mobile phone is a media player application or an application for putting through a cellular call, the mobile phone determines that the operating mode of the mobile phone is a normal mode.

S2304: The mobile phone notifies the Bluetooth headset to enter an operating mode that is the same as that of the mobile phone.

After a Bluetooth connection is established between the mobile phone and the Bluetooth headset, the Bluetooth headset goes into an idle mode. After receiving a notification message about an operating mode of the mobile phone, the Bluetooth headset enters a corresponding operating mode.

For example, after entering the normal mode (for example, an audio call mode or an audio play mode), the mobile phone notifies the Bluetooth headset to enter the normal mode. After the Bluetooth headset enters the normal mode, the Bluetooth headset may control the mobile phone according to a normal shortcut operation setting, for example, control the mobile phone to answer/end a call based on the shortcut operation "Tap the left headphone twice".

After entering the conference mode, the mobile phone notifies the Bluetooth headset to enter the conference mode. After the Bluetooth headset enters the conference mode, the Bluetooth headset may control the mobile phone based on a conference shortcut operation setting, for example, control the mobile phone to mute/unmute in a conference based on the shortcut operation "Tap the left headphone twice".

In some embodiments, after the Bluetooth headset enters the conference mode, the Bluetooth headset may play a first prompt tone, to remind a user that the Bluetooth headset has entered the conference mode. For example, the first prompt tone may be "Conference mode is enabled". However, after entering the normal mode, the Bluetooth headset may play a second prompt tone to remind the user that the Bluetooth headset has entered the normal mode. For example, the second prompt tone may be "Normal mode is enabled".

In addition, it should be noted that, when the mobile phone is being used, the operating mode of the mobile phone usually changes. After the operating mode of the mobile phone has changed, the mobile phone needs to notify, again, the Bluetooth headset to enter a corresponding operating mode.

By using the method for determining an operating mode of the Bluetooth headset provided in the foregoing embodiment, the Bluetooth headset can enter an operating mode corresponding to an operating mode of the mobile phone, to control the mobile phone in the operating mode.

FIG. 24 is a flowchart of a device control method according to an embodiment of this application, and relates to how a Bluetooth headset controls a mobile phone in different operating modes based on a same control operation. The method includes the following steps.

S2401: When the Bluetooth headset is in a normal mode, after receiving a first control operation of a user, the Bluetooth headset controls the mobile phone to perform a first action.

In this embodiment, the first control operation may be operating a control button preset on the Bluetooth headset, or may be a shortcut operation provided in the foregoing embodiments, for example, "Tap the left headphone twice" or "Tap the right headphone twice". A specific form of the first control operation is not limited in this embodiment. When the Bluetooth headset is in the normal mode, the Bluetooth headset controls, based on the first control operation, the mobile phone to perform the first action.

A shortcut operation setting result shown in FIG. 20(e) is used as an example below to explain step S2402. As shown in FIG. 20(e), in a normal shortcut operation, a control instruction corresponding to "Tap the left headphone twice" is "Answer/End a call", and a control instruction corresponding to the shortcut operation "Tap the right headphone twice" is "Pause/Next".

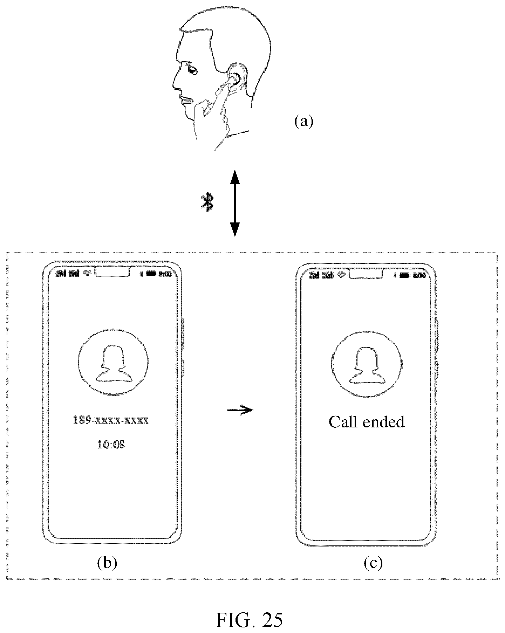

Refer to (a) to (c) in FIG. 25. After the Bluetooth headset detects that the first control operation entered by the user is "Tap the left headphone twice", as the mobile phone is currently on a call, the Bluetooth headset sends a call ending instruction to the mobile phone. After receiving the call ending instruction, the mobile phone ends the current call.

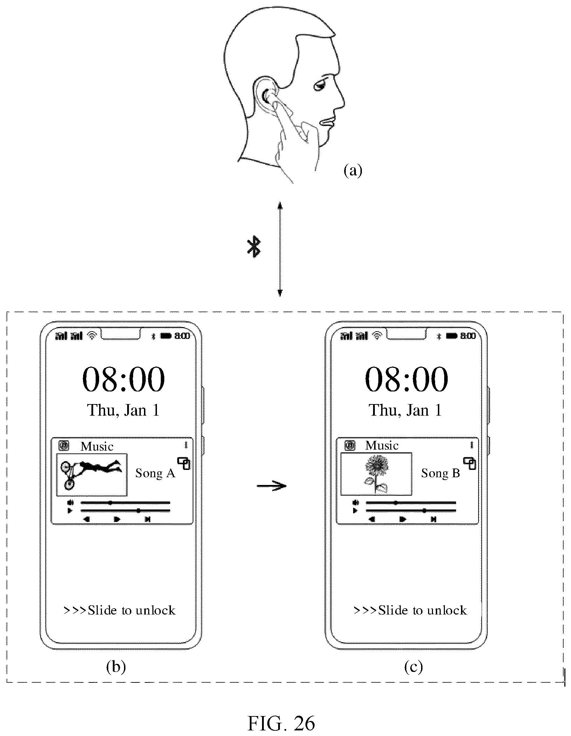

Refer to (a) to (c) in FIG. 26. After the Bluetooth headset detects that the first control operation entered by the user is "Tap the right headphone twice", as the mobile phone is currently playing music, the Bluetooth headset sends a next instruction to the mobile phone. After receiving the next instruction, the mobile phone plays a next song, for example, switches the music from "Song A" to "Song B".

S2402: When the Bluetooth headset is in a conference mode, after receiving a second control operation of the user, the Bluetooth headset controls the mobile phone to perform a second action.

In this embodiment, according to the method for joining a conference provided in the foregoing embodiments, the mobile phone may establish a conference control connection with the Bluetooth headset when automatically joining a conference or displaying a conference notification (for example, as shown in FIG. 11(a)). After the conference control connection is established, the user may control, based on the second control operation, the mobile phone to perform the second action, to control the conference. It should be noted that, in this embodiment, the first control operation and the second control operation are the same. For example, both are "Tap the left headphone twice" or "Tap the right headphone twice". The second action includes joining or exiting a conference, muting/unmuting, starting/stopping a video, and the like. S2402 is explained in detail below with reference to different examples.

### Example 1: Join a conference

In the conference mode, if the control instruction corresponding to the shortcut operation "Tap the left headphone twice" is "Join/Exit a conference", a process of the user controlling the mobile phone to join a conference by using the Bluetooth headset is described below. It should be understood that the process is mainly specific to a conference mode "Automatically notify a conference and join a conference with one tap". When the mobile phone is in a conference mode "Automatically join a conference when it starts", the mobile phone may automatically join a conference without a user operation.

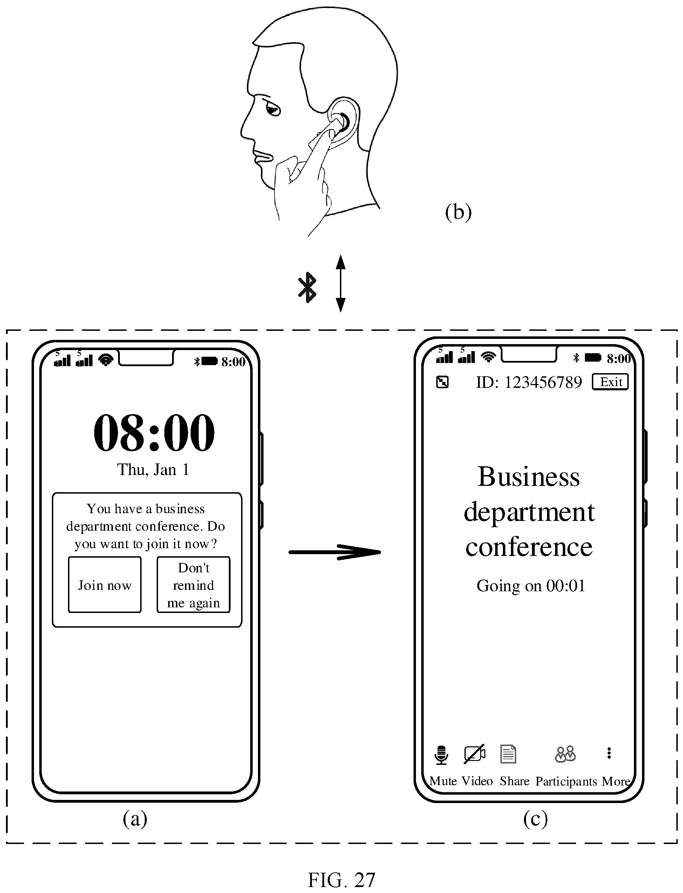

A business department conference is used as an example. Refer to (a) in FIG. 27. When a conference time comes, the mobile phone displays a conference notification, and establishes the conference control connection with the Bluetooth headset. Refer to (b) in FIG. 27. When detecting that the user enters the control operation "Tap the left headphone twice" on the Bluetooth headset, the Bluetooth headset sends a conference joining instruction to the mobile phone. The mobile phone controls, according to the instruction, a corresponding conferencing application to join a conference, and establishes an SCO link with the Bluetooth headset. After joining the conference successfully, the mobile phone displays a conference interface (for example, as shown in (c) in FIG. 27).

In addition, if the user wants to exit the conference during the conference, the user may further enter the control operation "Tap the left headphone twice" to exit the conference. In addition, after exiting the conference, the mobile phone disconnects the SCO link with the Bluetooth headset, and terminates transmission of voice information in the conference. It should be noted that, for both of the conference modes "Automatically join a conference when it starts" and "Automatically notify a conference and join a conference with one tap", an operation may be performed at the Bluetooth headset side to exit a conference.

### Example 2: Control muting in a conference

In the conference mode, if the control instruction corresponding to the shortcut operation "Tap the left headphone twice" is "Mute/Unmute" (for example, as shown in FIG. 20(g)), a process of the user controlling muting in a conference by using the Bluetooth headset is described below.

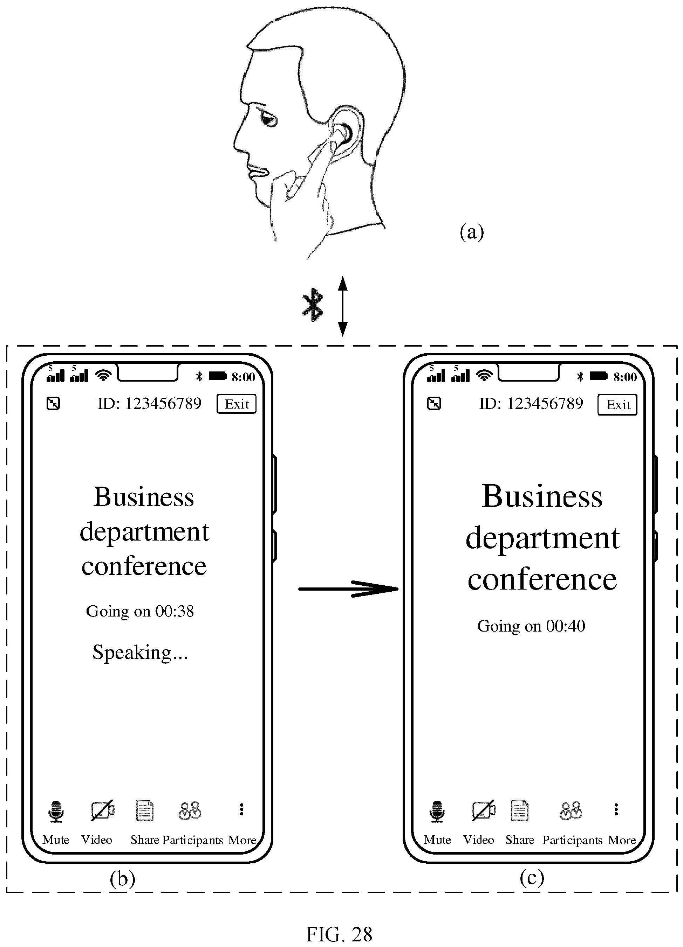

A business department conference is used as an example. Refer to (a) to (c) in FIG. 28. After the Bluetooth headset detects that the first control operation entered by the user is "Tap the left headphone twice", as the mobile phone is currently in an unmuted mode, the Bluetooth headset sends a muting instruction to the mobile phone. After receiving the muting instruction, the mobile phone no longer processes audio information collected and sent by the Bluetooth headset, so that the mobile phone enters a muted mode. During this process, an icon "Mute" in a conference interface changes from a selected state to an unselected state.

In addition, in some embodiments, after the Bluetooth headset detects that the control operation entered by the user is "Tap the left headphone twice", when a conference on the mobile phone is currently in the unmuted mode, the Bluetooth headset may deactivate a microphone at the Bluetooth headset side, and no longer collect audio information of the user, so that the conference enters the muted mode.

### Example 3: Start a conference video

In the conference mode, if the control instruction corresponding to the shortcut operation "Tap the left headphone twice" is "Mute/Unmute" (for example, as shown in FIG. 20(g)), a process of the user controlling muting in a conference by using the Bluetooth headset is described below.

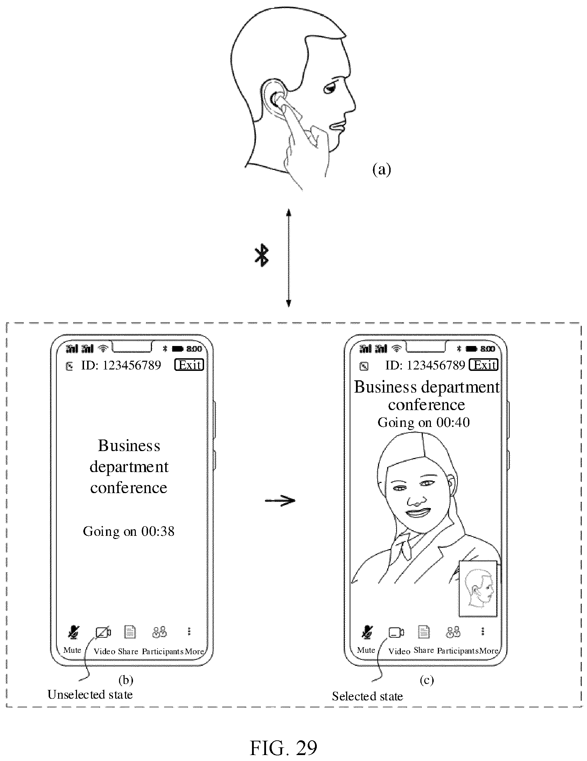

A business department conference is used as an example. Refer to (a) to (c) in FIG. 29. After detecting that the control operation entered by the user is "Tap the right headphone twice", the Bluetooth headset sends a video start instruction to the mobile phone. After receiving the video start instruction, the mobile phone enables a camera of the mobile phone, and displays a video interface, for example, a video interface shown in (c) in FIG. 29. During this process, an icon "Video" in a conference interface changes from an unselected state to a selected state.

In this application, after the Bluetooth connection is established between the Bluetooth headset and the mobile phone, a Bluetooth headset wearing detection can be performed. If the user is currently wearing the Bluetooth headset, it is determined that the Bluetooth headset is in a worn state. If the user is currently not wearing the Bluetooth headset, it is determined that the Bluetooth headset is in a not-worn state. If the Bluetooth headset is in the worn state, the Bluetooth headset sends a control instruction to the mobile phone based on a current operating mode and control operation. If the Bluetooth headset is in the not-worn state, the Bluetooth headset ignores a control operation entered by the user, and does not send a control instruction to the mobile phone.

In addition, if the Bluetooth headset detects that the Bluetooth headset is switched from the worn state to the not-worn state (that is, the user takes off the Bluetooth headset from the ears), the Bluetooth headset side pauses playing and collecting audio information, and switches over to the mobile phone for playing and collecting audio information. If the Bluetooth headset detects that the Bluetooth headset is switched from the not-worn state to the worn state (that is, the user wears the Bluetooth headset back), the Bluetooth headset is switched over to for playing and collecting audio information.

By using the device control method provided in this embodiment, there is no need to add an extra control operation definition (for example, "Tap the left headphone three times" or "Press and hold the right headphone ") for the Bluetooth headset, and the Bluetooth headset can control the mobile phone in the different operating modes based on a same control operation entered by the user, thereby improving user experience.

The device control method provided in this embodiment is described below by using an example in which the wearable device is a smart watch.

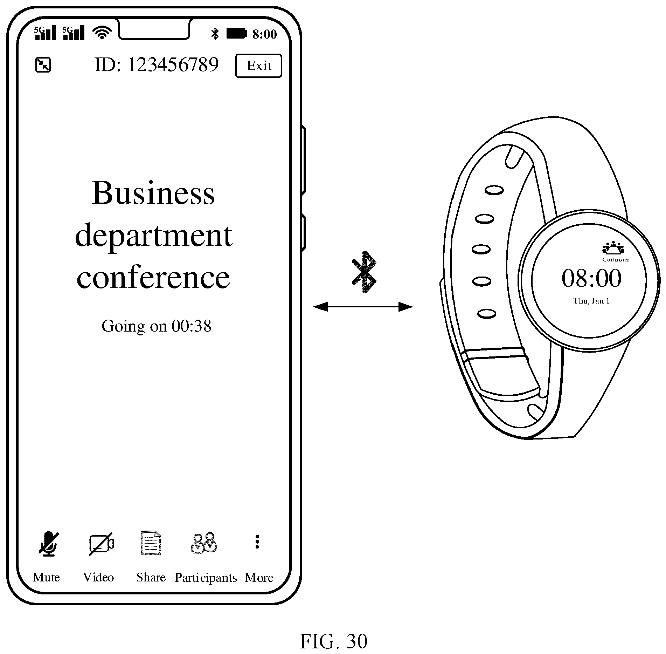

FIG. 30 is a schematic diagram of a structure of a conference control system according to yet another embodiment of this application. Refer to FIG. 30. During an online conference on a mobile phone, a user may control the current conference on the mobile phone by using a smart watch, for example, mute or umnute, turn on or turn off a camera, and view participant information during the conference. A process of controlling a conference on the mobile phone by using the smart watch is described in detail below.

It should be understood that after the mobile phone joins the conference, the smart watch needs to enter a conference mode to control the conference on the mobile phone. Therefore, a process of determining an operating mode of the Bluetooth headset is described first below.

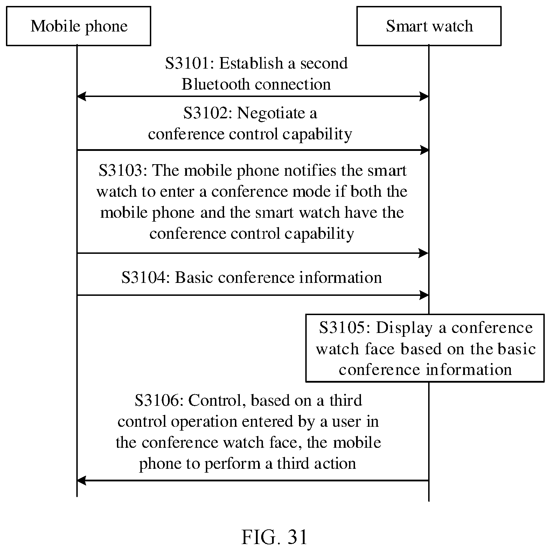

FIG. 31 is a flowchart of a device control method according to another embodiment of this application, and relates to how to control a conference on a mobile phone by using a smart watch. Specifically, the following steps are included.

S3101: A second Bluetooth connection is established between a mobile phone and a smart watch.

Specifically, for a process in which the second Bluetooth connection is established between the mobile phone and the smart watch, refer to the process in step S2301 in which the first Bluetooth connection is established between the mobile phone and the Bluetooth headset. Details are not described herein again in this embodiment.

S3102: The mobile phone and the smart watch negotiate a conference control capability.

In a possible implementation, the conference control capability is implemented according to a proprietary protocol (for example, a conference control profile (Profile)) preset for the mobile phone or the smart watch by a manufacturer of the mobile phone and/or the smart watch.

When for some reason, for example, manufacturers of the mobile phone and the smart watch are different, or the mobile phone or the Bluetooth headset is of a too early version, one or both of the mobile phone and the Bluetooth headset may not have the conference control capability. Therefore, after the second Bluetooth connection is established, the mobile phone and the smart watch need to negotiate the conference control capability. In this embodiment, the mobile phone may query, according to SDP, whether the smart watch stores the conference control profile, to determine whether the smart watch has the conference control capability.

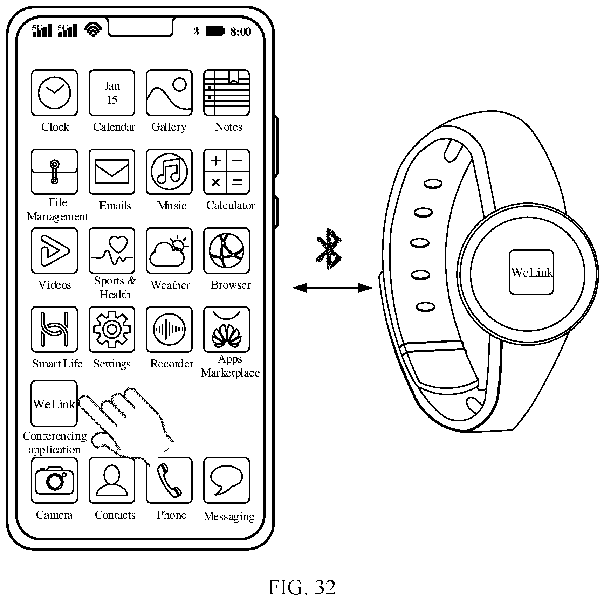

In another possible implementation, the mobile phone and/or the smart watch obtain/obtains the conference control capability by running a conferencing application. For example, refer to FIG. 32. Different versions of a same conferencing application (for example, WeLink) are installed on the mobile phone and the smart watch. A phone-version conferencing application is installed on the mobile phone, and a watch-version conferencing application is installed on the smart watch. The mobile phone and the smart watch obtain the conference control capability by running the phone-version conferencing application.

Since the smart watch may not have the conference control capability because no conferencing application may be installed, after the second Bluetooth connection is established, the mobile phone and the smart watch need to negotiate the conference control capability. In this embodiment, the mobile phone may query whether the conferencing application is installed on the smart watch, to determine whether the smart watch has the conference control capability.

In some embodiments, the mobile phone may send a third indication message to the smart watch first, where the third indication message is used to indicate whether the mobile phone has the conference control capability. After receiving the third indication message, if the mobile phone has the conference control capability, the smart watch sends a fourth indication message to the mobile phone, where the fourth indication message is used to indicate whether the smart watch has the conference control capability. Certainly, the mobile phone may alternatively send the fourth indication message to the smart watch first. After receiving the fourth indication message, the smart watch sends the third indication message to the mobile phone. By using the third indication message and the fourth indication message, the mobile phone and the smart watch can determine whether a local side and a peer side have the conference control capability.

In this embodiment, if the smart watch has the conference control capability, the smart watch can control a conference setting at the mobile phone side and has a capability to view conference-related information when the mobile phone runs the phone-version conferencing application. Controlling the conference setting at the mobile phone side includes: controlling the mobile phone to join or exit a conference, to mute/unmute, to start/stop a video, and the like. Viewing the conference-related information includes: viewing information about a participant, for example, a name, information about a moderator, and an on/off state of a microphone and a camera.

If the mobile phone has the conference control capability, during a conference, the mobile phone can change a conference setting according to a control instruction of the smart watch, and assist the smart watch in viewing the conference-related information.

It should be noted that, if neither of the mobile phone and the smart watch has the conference control capability, subsequent steps S3103 to S3106 are not performed. If both the mobile phone and the Bluetooth headset have the conference control capability, the subsequent steps S3103 to S3106 are performed.

S3103: The mobile phone notifies the smart watch to enter a conference mode if both the mobile phone and the smart watch have the conference control capability.

In this embodiment, the mobile phone may establish a conference control connection with the smart watch when automatically joining a conference or displaying a conference notification (for example, as shown in FIG. 11(a)), to control the smart watch to enter the conference mode. After entering the conference mode, the smart watch may control a conference based on a user operation, for example, join/exit a conference, to mute/unmute, or to view participant information.

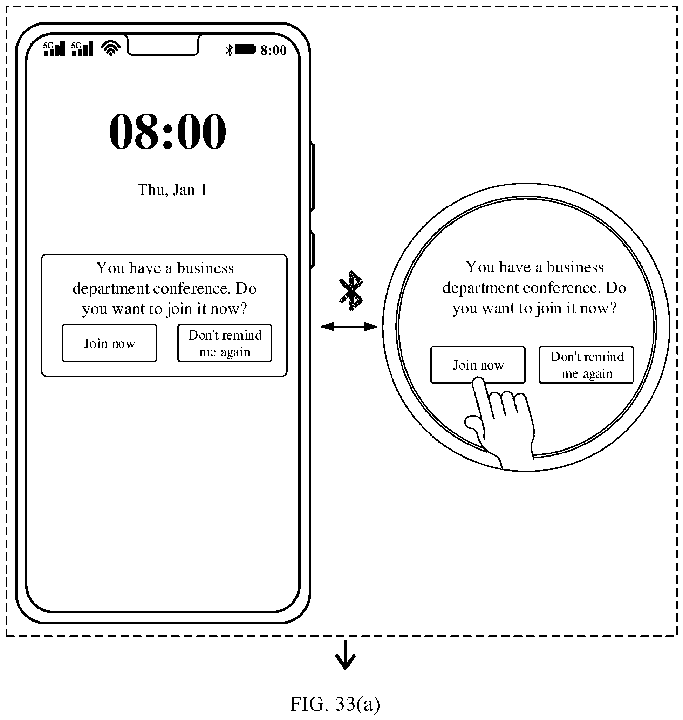

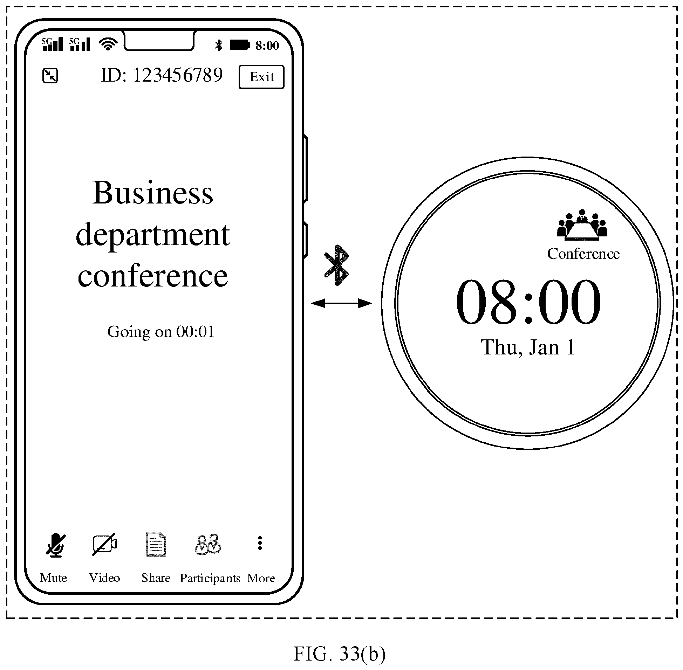

For example, as shown in FIG. 33(a), when the mobile phone is in a conference mode "Automatically notify a conference and join a conference with one tap", and when the mobile phone displays a conference notification, the smart watch may display the same conference notification. When the user operates the icon "Join now" on the smart watch, the mobile phone joins a conference. After joining the conference, as shown in FIG. 33(b), the mobile phone displays a conference interface, and the smart watch displays a conference control.

S3104: The mobile phone sends basic conference information to the smart watch.

After the mobile phone joins the conference, the mobile phone sends basic conference information to the smart watch. In this embodiment, the basic conference information includes a conference name, a conference length, information about a current speaker, and a current conference setting (for example, muted or unmuted, and video on or off).

S3105: The smart watch displays a conference watch face based on the basic conference information.

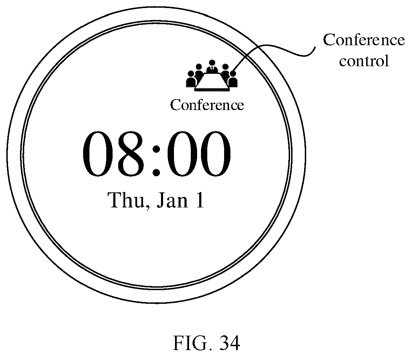

In some embodiments, for example, the conference watch face is shown in FIG. 34. A conference control is displayed in a home screen interface (that is, a desktop) of the smart watch. The conference control instructs the smart watch to enter the conference mode, and a user may control, by operating the conference control, the smart watch to display a conference information interface.

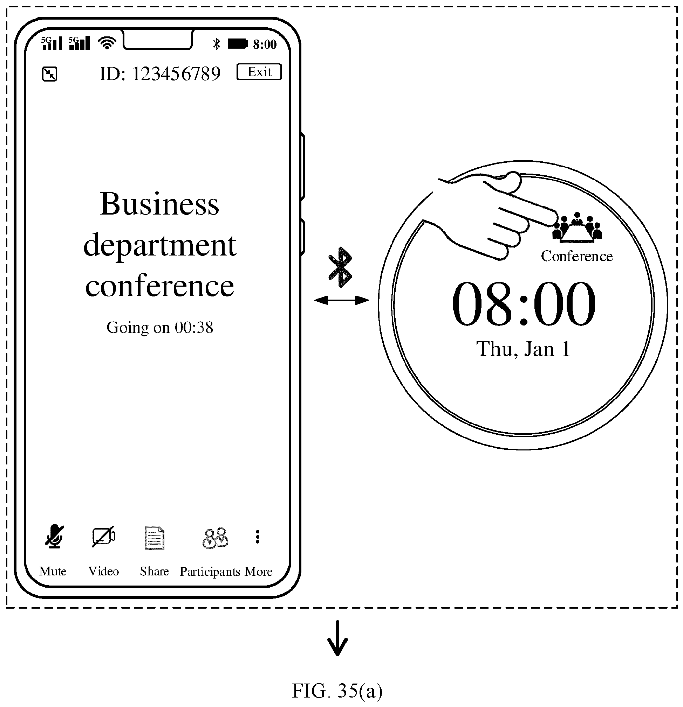

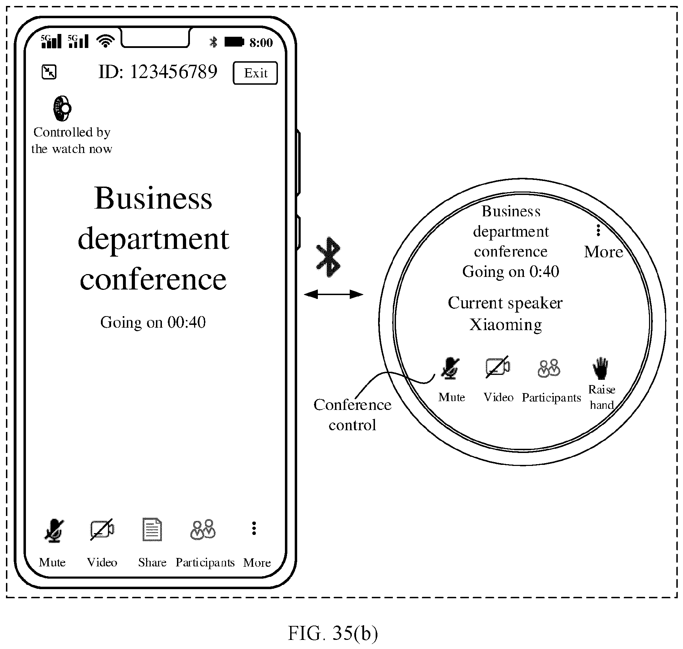

In some other embodiments, the conference watch face is a conference information interface, for example, as shown in FIG. 35(b). Specifically, refer to FIG. 35(a). After the smart watch detects an operation of the user on a conference icon, the smart watch may enter the conference information interface. For example, the conference information interface may be FIG. 35(b). In the conference information interface, basic conference information (for example, a conference name, a conference length, and a current speaker) and some conference controls, for example, an icon "Mute" (namely, a mute control), an icon "Video" (namely, a video control), an icon "Share" (namely, a sharing control) for a file, an icon for viewing "Participants" (namely, a participant control), a hand raising icon (namely, a hand raising control), and more option icons.

It should be noted that, in some embodiments, after the smart watch enters the conference information interface, the smart watch may notify the mobile phone that the smart watch is controlling the conference. Correspondingly, if the mobile phone determines that the smart watch is controlling the conference, as shown in the conference interface of the mobile phone included in FIG. 35(b), the mobile phone may display reminder information in the conference interface, to remind the user that the current conference is being controlled by the smart watch. For example, the reminder information may include a reminder icon (for example, an icon of the smart watch) and reminder information (for example, a text "Controlled by the watch now").

S3106: The smart watch controls, based on a third control operation entered by the user in the conference watch face, the mobile phone to perform a third action.

In this embodiment, that the smart watch controls the mobile phone to perform the third action includes: the mobile phone is controlled to change a conference setting (for example, controlled to mute or unmute in the conference, to start or stop a video, and to raise a hand to speak), view conference-related information (for example, view participant information), and the like.

With reference to a specific example, a process in which the smart watch controls a conference on the mobile phone is described below.

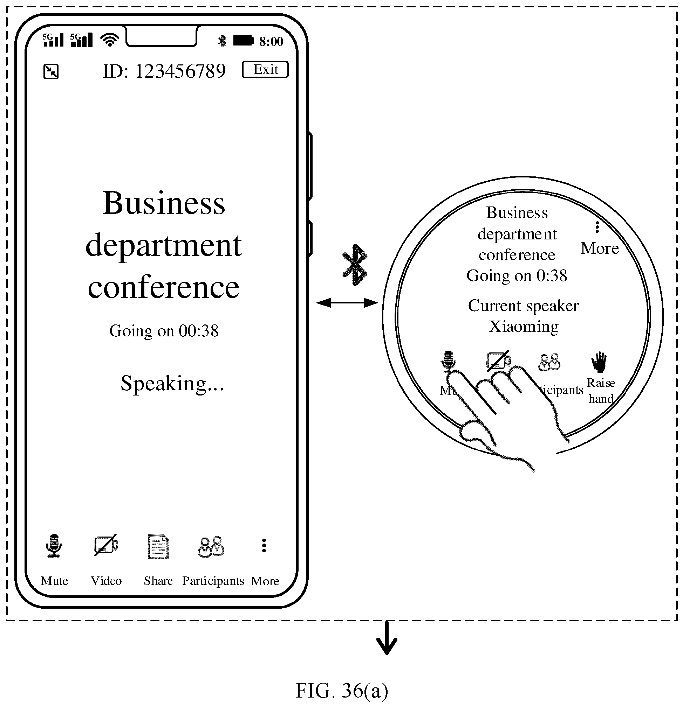

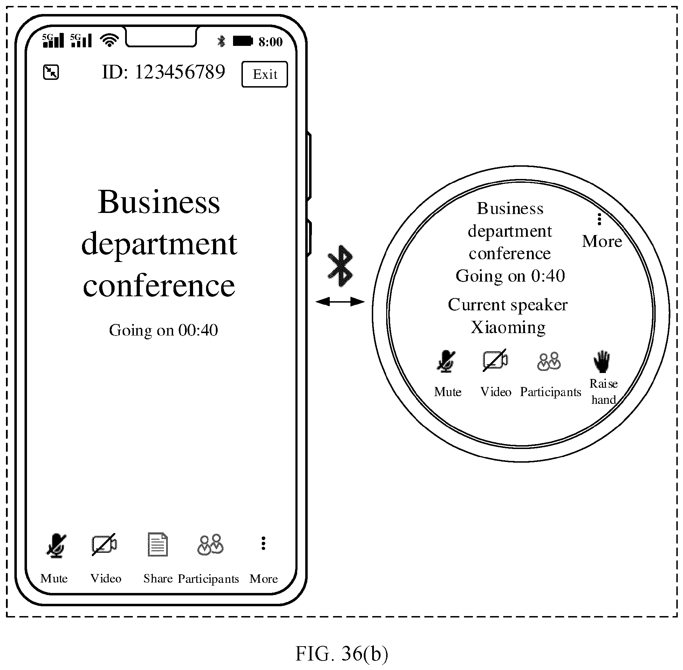

In some embodiments, as shown in FIG. 36(a), in the conference interface of the mobile phone and the conference information interface of the smart watch, an icon "Mute" is in a selected state, and a microphone of the mobile phone is turned on. After the smart watch detects an operation of the user on the icon "Mute" in the selected state, the smart watch sends a muting instruction to the mobile phone, to control the mobile phone to turn off the microphone and enter a muted mode. After the mobile phone enters the muted mode, as shown in FIG. 36(b), in the conference interface of the mobile phone and the conference information interface of the smart watch, a state of the icon "Mute" changes to an unselected state.

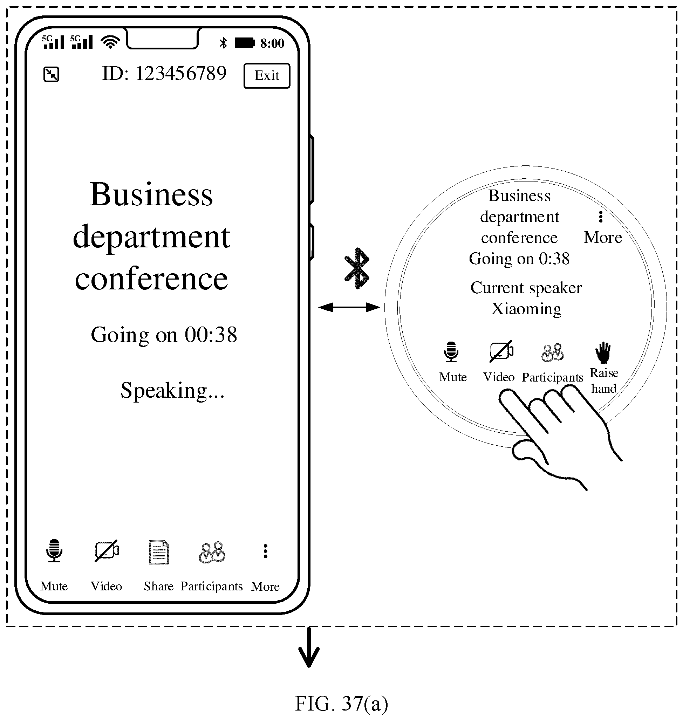

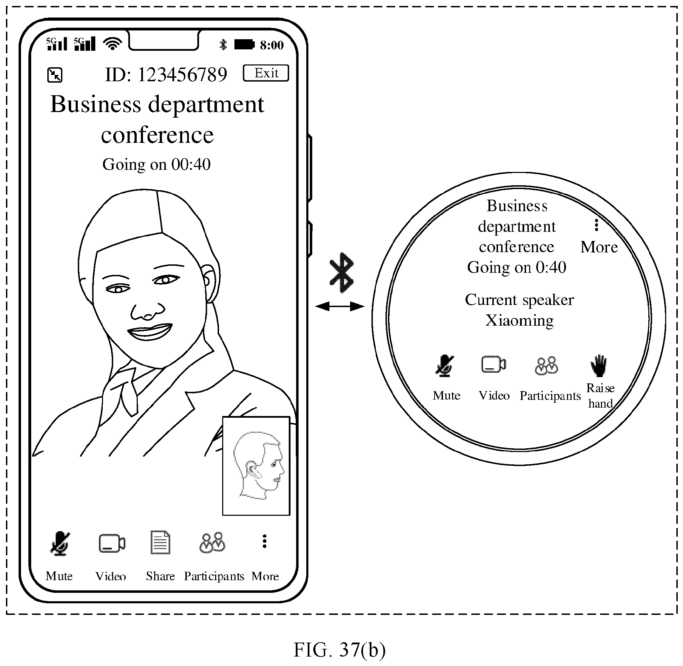

In some other embodiments, as shown in FIG. 37(a), in the conference interface of the mobile phone and the conference information interface of the smart watch, an icon "Video" is in an unselected state, and a camera of the mobile phone is currently turned off. After the smart watch detects an operation of the user on the icon "Video" in the unselected state, the smart watch sends a video start instruction to the mobile phone, to control the mobile phone to turn on the camera. After the mobile phone starts the video, as shown in FIG. 37(b), in the conference interface of the mobile phone and the conference information interface of the smart watch, a state of the icon "Video" changes to a selected state that indicates that the video is started. In addition, after the mobile phone starts the video, an interface of the mobile phone may display an image collected by an electronic device used by another participant and an image collected by the mobile phone.

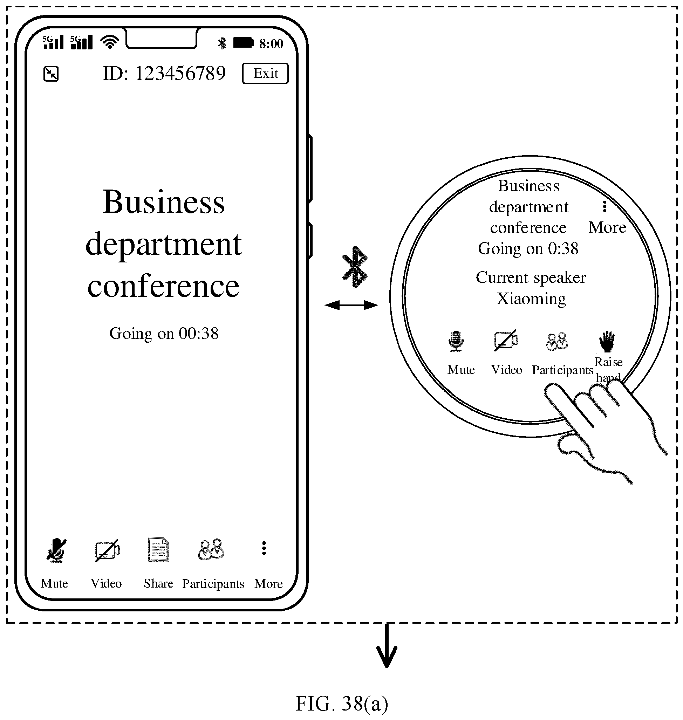

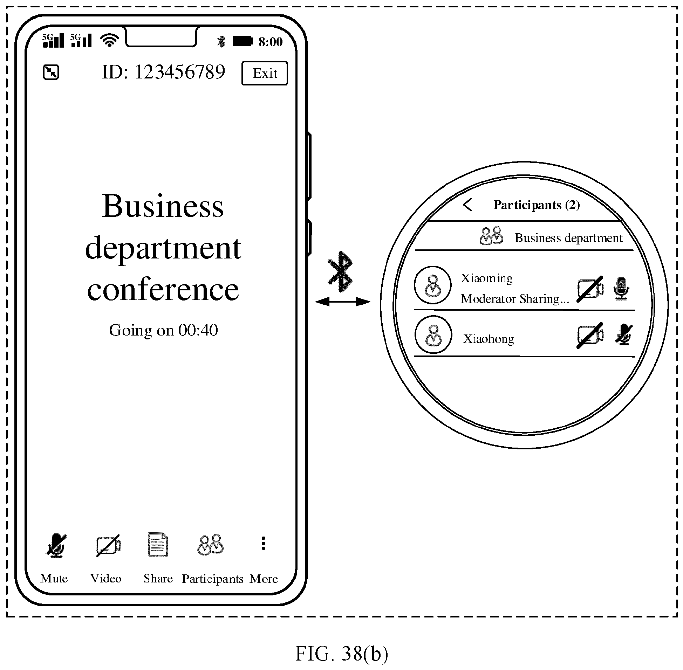

In some other embodiments, as shown in FIG. 38(a), after the smart watch detects an operation of the user on an icon "Participants", the smart watch sends a request for viewing participant information to the mobile phone. After receiving the request for viewing the participant information, the mobile phone sends participant information to the smart watch. The participant information may include a name of a participant, a muting status, a video enabling status, information about a conference moderator, and the like. After receiving the participant information, the smart watch may display a participant information interface displayed, for example, by a smart watch in FIG. 38(b).

By using the device control method provided in the foregoing embodiments, the user may directly control a conference on the mobile phone by using the smart watch, thereby helping improve user experience.

When using a mobile phone to attend a conference, to avoid disturbing another user's working due to conference audio and facilitate an operation of the user, a user may use a Bluetooth headset and a smart watch at the same time.

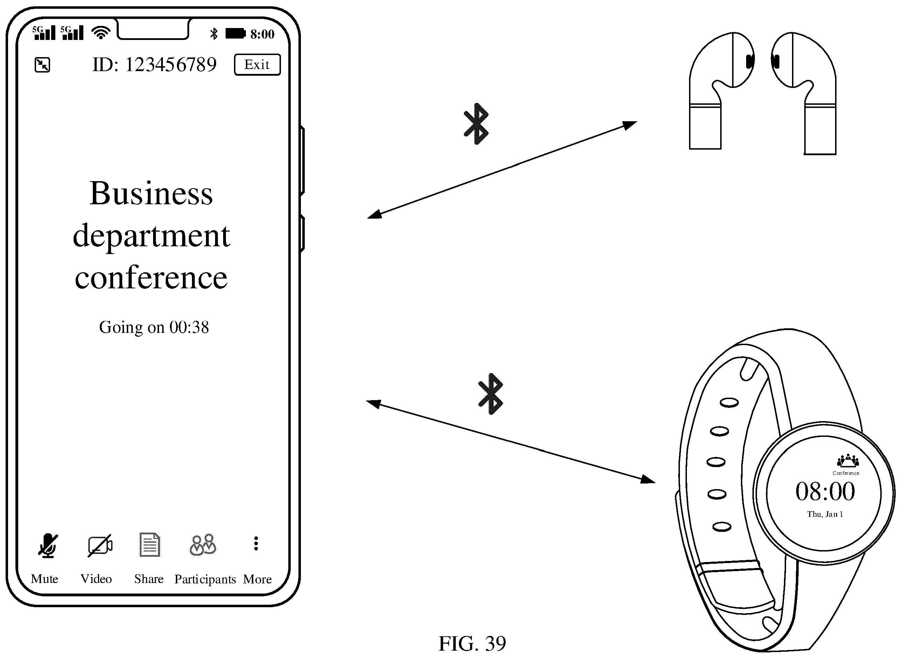

In a possible implementation, with reference to a schematic diagram of a structure of a conference control system shown in FIG. 39, the Bluetooth headset and the smart watch each are connected to the mobile phone via Bluetooth, and each can independently control a conference on the mobile phone. For a specific process of controlling, refer to the foregoing descriptions. Details are not described herein in this embodiment.

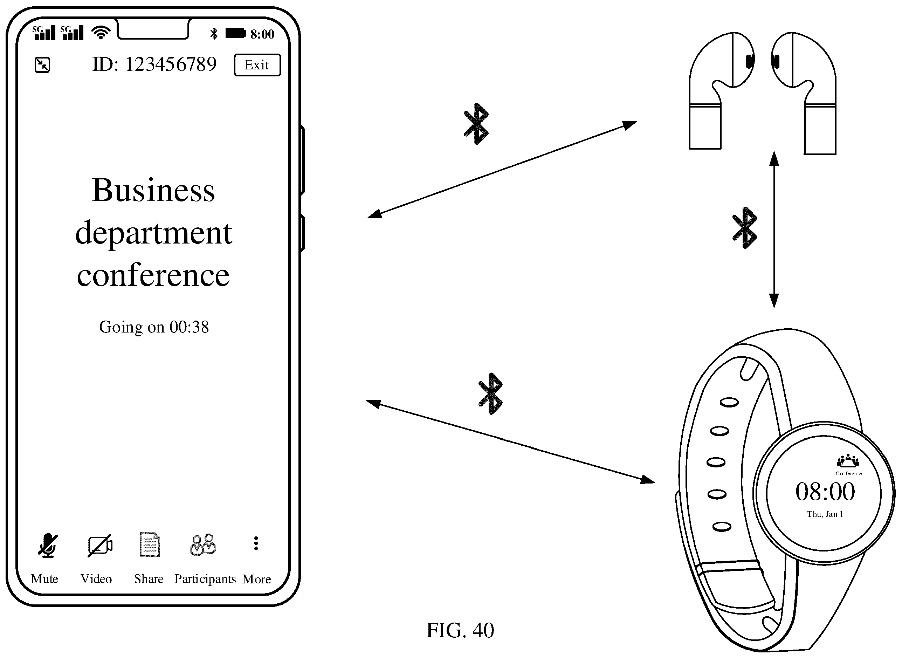

In another possible implementation, with reference to a schematic diagram of a structure of the conference control system shown in FIG. 40, on the basis of respective connections between the mobile phone and the Bluetooth headset and the smart watch via Bluetooth and respective capabilities of independently controlling a conference on the mobile phone, a third Bluetooth connection is further established between the Bluetooth headset and the smart watch. For example, after the smart watch opens a conferencing application, the smart watch may control the Bluetooth headset to play a third prompt tone, for example, "The conference is now controlled by the smart watch".

It should be understood that sequence numbers of the steps in the foregoing embodiments do not mean a sequence for performing. The sequence for performing the processes should be determined based on functions and internal logic of the processes, and should not constitute any limitation on implementation processes of the embodiments of this application.

Corresponding to the device control method shown in the foregoing embodiments, an embodiment of this application provides a device control system, including an electronic device and a Bluetooth headset. The electronic device is connected to the Bluetooth headset via Bluetooth.

It should be understood that "first", "second", "third", and various serial numbers in this specification are merely for purpose of distinction for ease of description, but are not intended to limit the scope of this application.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Reference to "an embodiment", "some embodiments", or the like described in the description of this application indicates that one or more embodiments of this application includes/include a specific feature, structure, or characteristic described with reference to those embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "have", "contain" and their variants all mean "include but are not limited to", unless otherwise specifically emphasized in another manner.

## Claims

1. A device control system, comprising an electronic device and a Bluetooth headset, wherein the electronic device is connected to the Bluetooth headset via Bluetooth, and
the Bluetooth headset is configured to:
when the Bluetooth headset is in a first mode, control the electronic device to perform a first action after the Bluetooth headset receives a first control operation of a user; and
when the Bluetooth headset is in a second mode, control the electronic device to perform a second action after the Bluetooth headset receives a second control operation of the user, wherein
the first control operation is the same as the second control operation, the first action is the same as or different from the second action, the first action is associated with the first control operation through a first user setting, and the second action is associated with the second control operation through a second user setting, **characterized in that** the first mode is a call mode or an audio play mode, and the second mode is a conference mode,
and **in that** the electronic device is configured to:
query whether the Bluetooth headset has a conference control capability by using a session description protocol SDP; and
if the Bluetooth headset has the conference control capability, notify the Bluetooth headset to enter the conference mode after the electronic device enters the conference mode, and notify the Bluetooth headset to exit the conference mode after the electronic device exits the conference mode.

2. The system according to claim 1, wherein
the first action comprises playing audio, pausing audio, playing next audio, enabling a voice assistant, putting through a call, or cutting off a call; and
the second action comprises muting in a conference, unmuting in a conference, starting a conference video, stopping a conference video, joining a conference, exiting a conference, turning up a volume for a conference, or turning down a volume for a conference.

3. The system according to any one of claims 1 to 2, wherein the first control operation comprises tapping a left headphone twice or tapping a right headphone twice.

4. The system according to any one of claims 1 to 3, wherein a conferencing application is installed on the electronic device, a conference is scheduled in the conferencing application, and the electronic device is further configured to:
display a conference notification at a preset time before the conference starts, wherein the conference notification comprises a first control and a second control;
display a conference interface for the conference after an operation of the user on the first control is detected; and
close the conference notification after an operation of the user on the second control is detected.

5. The system according to any one of claims 1 to 3, wherein a conferencing application is installed on the electronic device, a conference is scheduled in the conferencing application, and the electronic device is further configured to automatically display a conference interface for the conference at a preset time before the conference starts.

6. The system according to any one of claims 1 to 4. wherein at least one conferencing application is installed on the electronic device, at least two conferences are scheduled in the at least one conferencing application, and the electronic device is further configured to:
display a conference conflict notification when there is a time conflict between the at least two conferences.

7. The system according to any one of claims 1 to 6, wherein the system further comprises a smart watch, the smart watch is connected to the electronic device via Bluetooth, and
the electronic device is configured to enter the conference mode in response to an operation of the user for joining a conference; and
the smart watch is configured to:
display a conference watch face, wherein the conference watch face comprises at least one conference control, and the conference control is used to indicate the smart watch to enter the conference mode; and
control the electronic device to perform a third action in response to a third control operation of the user on the conference control.

8. The system according to claim 7, wherein the smart watch is further configured to:
query whether the smart watch has a conference control capability by using the session description protocol SDP; and
if the smart watch has the conference control capability, control the smart watch to display the conference watch face after the electronic device enters the conference mode, and control the smart watch to stop displaying the conference watch face after the electronic device exits the conference mode.

9. The system according to claim 7 or 8, wherein the smart watch is further configured to:
when the conference control is a mute control, control, based on the third control operation of the user on the mute control, the electronic device to mute or unmute in the conference.

10. The system according to claim 7 or 8, wherein the smart watch is further configured to:
when the conference control is a video control, control, based on the third control operation of the user on the video control, the electronic device to start a conference video or stop a conference video.

11. The system according to claim 7 or 8, wherein the smart watch is further configured to:
when the conference control is a participant control, display, based on the third control operation of the user on the participant control, information about a participant in the conference.

## Patentansprüche

1. Vorrichtungssteuerungssystem, umfassend eine elektronische Vorrichtung und ein Bluetooth-Headset, wobei die elektronische Vorrichtung über Bluetooth mit dem Bluetooth-Headset verbunden ist und
das Bluetooth-Headset zu Folgendem konfiguriert ist:
wenn sich das Bluetooth-Headset in einem ersten Modus befindet, Steuern der elektronischen Vorrichtung, um eine erste Handlung durchzuführen, nachdem das Bluetooth-Headset einen ersten Steuerungsvorgang eines Benutzers empfangen hat; und
wenn sich das Bluetooth-Headset in einem zweiten Modus befindet, Steuern der elektronischen Vorrichtung, um eine zweite Handlung durchzuführen, nachdem das Bluetooth-Headset einen zweiten Steuerungsvorgang des Benutzers empfangen hat, wobei
der erste Steuerungsvorgang der gleiche wie der zweite Steuerungsvorgang ist, die erste Handlung die gleiche wie die zweite Handlung ist oder sich von dieser unterscheidet, die erste Handlung dem ersten Steuerungsvorgang über eine erste Benutzereinstellung zugeordnet ist und die zweite Handlung dem zweiten Steuerungsvorgang über eine zweite Benutzereinstellung zugeordnet ist, **dadurch gekennzeichnet, dass** der erste Modus ein Anrufmodus oder ein Audiowiedergabemodus ist und der zweite Modus ein Besprechungsmodus ist,
und dadurch, dass die elektronische Vorrichtung zu Folgendem konfiguriert ist:
Abfragen, ob das Bluetooth-Headset eine Besprechungssteuerungsfähigkeit aufweist, unter Verwendung eines Sitzungsbeschreibungsprotokolls, SDP; und
falls das Bluetooth-Headset die Besprechungssteuerungsfähigkeit aufweist, Benachrichtigen des Bluetooth-Headsets, in den Besprechungsmodus einzutreten, nachdem die elektronische Vorrichtung in den Besprechungsmodus eingetreten ist, und Benachrichtigen des Bluetooth-Headsets, den Besprechungsmodus zu verlassen, nachdem die elektronische Vorrichtung den Besprechungsmodus verlassen hat.

2. System nach Anspruch 1, wobei
die erste Handlung Wiedergeben von Audio, Pausieren von Audio, Wiedergeben folgenden Audios, Ermöglichen eines Sprachassistenten, Weiterleiten eines Anrufs oder Beenden eines Anrufs umfasst; und
die zweite Handlung Stummschalten in einer Besprechung, Aufheben des Stummschaltens in einer Besprechung, Starten eines Besprechungsvideos, Stoppen eines Besprechungsvideos, Beitreten zu einer Besprechung, Verlassen einer Besprechung, Erhöhen einer Lautstärke für eine Besprechung oder Verringern einer Lautstärke für eine Besprechung umfasst.

3. System nach einem der Ansprüche 1 oder 2, wobei der erste Steuerungsvorgang zweimaliges Antippen eines linken Kopfhörers oder zweimaliges Antippen eines rechten Kopfhörers umfasst.

4. System nach einem der Ansprüche 1 bis 3, wobei eine Besprechungsanwendung auf der elektronischen Vorrichtung installiert ist, eine Besprechung in der Besprechungsanwendung geplant ist und die elektronische Vorrichtung ferner zu Folgendem konfiguriert ist:
Anzeigen einer Besprechungsbenachrichtigung zu einem voreingestellten Zeitpunkt, bevor die Besprechung startet, wobei die Besprechungsbenachrichtigung eine erste Steuerung und eine zweite Steuerung umfasst;
Anzeigen einer Besprechungsschnittstelle für die Besprechung, nachdem ein Vorgang des Benutzers auf der ersten Steuerung detektiert wurde; und
Schließen der Besprechungsbenachrichtigung, nachdem ein Vorgang des Benutzers auf der zweiten Steuerung detektiert wurde.

5. System nach einem der Ansprüche 1 bis 3, wobei eine Besprechungsanwendung auf der elektronischen Vorrichtung installiert ist, eine Besprechung in der Besprechungsanwendung geplant ist und die elektronische Vorrichtung ferner dazu konfiguriert ist, eine Besprechungsschnittstelle für die Besprechung zu einem voreingestellten Zeitpunkt, bevor die Besprechung startet, automatisch anzuzeigen.

6. System nach einem der Ansprüche 1 bis 4, wobei mindestens eine Besprechungsanwendung auf der elektronischen Vorrichtung installiert ist, mindestens zwei Besprechungen in der mindestens einen Besprechungsanwendung geplant sind und die elektronische Vorrichtung ferner zu Folgendem konfiguriert ist:
Anzeigen einer Besprechungskonfliktbenachrichtigung, wenn es einen Zeitkonflikt zwischen den mindestens zwei Besprechungen gibt.

7. System nach einem der Ansprüche 1 bis 6, wobei das System ferner eine Smartwatch umfasst, die Smartwatch über Bluetooth mit der elektronischen Vorrichtung verbunden ist und
die elektronische Vorrichtung dazu konfiguriert ist, als Reaktion auf einen Vorgang des Benutzers zum Beitreten einer Besprechung in den Besprechungsmodus einzutreten; und
die Smartwatch zu Folgendem konfiguriert ist:
Anzeigen eines Besprechungszifferblatts, wobei das Besprechungszifferblatt mindestens eine Besprechungssteuerung umfasst und die Besprechungssteuerung dazu verwendet wird, der Smartwatch anzugeben, in den Besprechungsmodus einzutreten; und
Steuern der elektronischen Vorrichtung, um eine dritte Handlung als Reaktion auf einen dritten Steuerungsvorgang des Benutzers auf der Besprechungssteuerung durchzuführen.

8. System nach Anspruch 7, wobei die Smartwatch ferner zu Folgendem konfiguriert ist:
Abfragen, ob die Smartwatch eine Besprechungssteuerungsfähigkeit aufweist, unter Verwendung des Sitzungsbeschreibungsprotokolls, SDP; und
falls die Smartwatch die Besprechungssteuerungsfähigkeit aufweist, Steuern der Smartwatch, um das Besprechungszifferblatt anzuzeigen, nachdem die elektronische Vorrichtung in den Besprechungsmodus eingetreten ist, und Steuern der Smartwatch, um das Anzeigen des Besprechungszifferblatts zu stoppen, nachdem die elektronische Vorrichtung den Besprechungsmodus verlassen hat.

9. System nach Anspruch 7 oder 8, wobei die Smartwatch ferner zu Folgendem konfiguriert ist:
wenn die Besprechungssteuerung eine Stummschaltungssteuerung ist, Steuern, basierend auf dem dritten Steuerungsvorgang des Benutzers auf der Stummschaltungssteuerung, der elektronischen Vorrichtung, um in der Besprechung stummzuschalten oder das Stummschalten aufzuheben.

10. System nach Anspruch 7 oder 8, wobei die Smartwatch ferner zu Folgendem konfiguriert ist:
wenn die Besprechungssteuerung eine Videosteuerung ist, Steuern, basierend auf dem dritten Steuerungsvorgang des Benutzers auf der Videosteuerung, der elektronischen Vorrichtung, um ein Besprechungsvideo zu starten oder ein Besprechungsvideo zu stoppen.

11. System nach Anspruch 7 oder 8, wobei die Smartwatch ferner zu Folgendem konfiguriert ist:
wenn die Besprechungssteuerung eine Teilnehmersteuerung ist, Anzeigen, basierend auf dem dritten Steuerungsvorgang des Benutzers auf der Teilnehmersteuerung, von Informationen über einen Teilnehmer an der Besprechung.

## Revendications

1. Système de commande de dispositif, comprenant un dispositif électronique et un casque Bluetooth, dans lequel le dispositif électronique est connecté au casque Bluetooth via Bluetooth, et le casque Bluetooth est configuré pour :
lorsque le casque Bluetooth est dans un premier mode, la commande du dispositif électronique pour réaliser une première action après que le casque Bluetooth a reçu une première opération de commande d'un utilisateur ; et
lorsque le casque Bluetooth est dans un second mode, la commande du dispositif électronique pour réaliser une deuxième action après que le casque Bluetooth a reçu une deuxième opération de commande de l'utilisateur, dans lequel
la première opération de commande est identique à la deuxième opération de commande, la première action est identique ou différente de la deuxième action, la première action est associée à la première opération de commande via un premier paramètre utilisateur, et la deuxième action est associée à la deuxième opération de commande via un second paramètre utilisateur, **caractérisé en ce que** le premier mode est un mode d'appel ou un mode lecture audio, et le second mode est un mode conférence,
et **en ce que** le dispositif électronique est configuré pour :
demander si le casque Bluetooth a une capacité de commande de conférence à l'aide d'un protocole de description de session, SDP ; et
si le casque Bluetooth a la capacité de commande de conférence, notifier au casque Bluetooth d'entrer dans un mode conférence après que le dispositif électronique est entré en mode conférence, et notifier au casque Bluetooth de sortir du mode conférence après que le dispositif électronique est sorti du mode conférence.

2. Système selon la revendication 1, dans lequel
la première action comprend la lecture d'un fichier audio, la mise en pause de la lecture audio, la lecture du fichier audio suivant, l'activation d'un assistant vocal, le fait de passer un appel ou de raccrocher un appel ; et
la deuxième action comprend la mise en sourdine lors d'une conférence, le fait d'enlever la sourdine lors d'une conférence, le démarrage d'une visioconférence, l'arrêt d'une visioconférence, le fait de rejoindre une conférence, le fait de sortir d'une conférence, l'augmentation du volume d'une conférence, ou la diminution du volume d'une conférence.

3. Système selon l'une quelconque des revendications 1 et 2, dans lequel la première opération de commande comprend le fait de tapoter deux fois sur un écouteur gauche ou le fait de tapoter deux fois sur un écouteur droit.

4. Système selon l'une quelconque des revendications 1 à 3, dans lequel une application de conférence est installée sur le dispositif électronique, une conférence est planifiée dans l'application de conférence, et le dispositif électronique est également configuré pour :
afficher une notification de conférence à une heure prédéfinie avant le début de la conférence, dans lequel la notification de conférence comprend une première commande et une seconde commande ;
afficher une interface de conférence pour la conférence après la détection d'une opération de l'utilisateur sur la première commande ; et
fermer la notification de conférence après la détection d'une opération de l'utilisateur sur la seconde commande.

5. Système selon l'une quelconque des revendications 1 à 3, dans lequel une application de conférence est installée sur le dispositif électronique, une conférence est planifiée dans l'application de conférence, et le dispositif électronique est également configuré pour afficher automatiquement une interface de conférence pour la conférence à une heure prédéfinie avant le début de la conférence.

6. Système selon l'une quelconque des revendications 1 à 4, dans lequel au moins une application de conférence est installée sur le dispositif électronique, au moins deux conférences sont planifiées dans l'au moins une application de conférence, et le dispositif électronique est également configuré pour :
afficher une notification de conflit de conférence lorsqu'il existe un conflit d'horaire entre les au moins deux conférences.

7. Système selon l'une quelconque des revendications 1 à 6, dans lequel le système comprend également une montre connectée, la montre connectée est reliée au dispositif électronique via Bluetooth, et
le dispositif électronique est configuré pour entrer en mode conférence en réponse à une opération de l'utilisateur visant à rejoindre une conférence ; et
la montre connectée est configurée pour :
afficher un cadran de montre de conférence, dans lequel le cadran de montre de conférence comprend au moins une commande de conférence, et la commande de conférence est utilisée pour indiquer à la montre connectée d'entrer en mode conférence ; et
commander le dispositif électronique pour réaliser une troisième action en réponse à une troisième opération de commande de l'utilisateur sur la commande de conférence.

8. Système selon la revendication 7, dans lequel la montre connectée est également configurée pour :
demander si la montre connectée a une capacité de commande de conférence à l'aide du protocole de description de session, SDP ; et
si la montre connectée a la capacité de commande de conférence, commander la montre connectée pour afficher le cadran de montre de conférence après que le dispositif électronique est entré en mode conférence, et commander à la montre connectée d'arrêter d'afficher le cadran de montre de conférence après que le dispositif électronique est sorti du mode conférence.

9. Système selon la revendication 7 ou 8, dans lequel la montre connectée est également configurée pour :
lorsque la commande de conférence est une commande de mise en sourdine, commander, sur la base de la troisième opération de commande de l'utilisateur sur la commande de mise en sourdine, au dispositif électronique de mettre en sourdine ou d'enlever la sourdine dans la conférence.

10. Système selon la revendication 7 ou 8, dans lequel la montre connectée est également configurée pour :
lorsque la commande de conférence est une commande de vidéo, commander, sur la base de la troisième opération de commande de l'utilisateur sur la commande de vidéo, au dispositif utilisateur de démarrer une visioconférence ou d'arrêter une visioconférence.

11. Système selon la revendication 7 ou 8, dans lequel la montre connectée est également configurée pour :
lorsque la commande de conférence est une commande de participant, afficher, sur la base de la troisième opération de commande de l'utilisateur sur la commande de participant, des informations sur un participant dans la conférence.
